(19) Europäisches Patentamt
European Patent Office
Office européen des brevets

(11) EP 2 886 610 A1

(12) **EUROPEAN PATENT APPLICATION**
published in accordance with Art. 153(4) EPC

(43) Date of publication:
**24.06.2015 Bulletin 2015/26**

(21) Application number: **13879638.8**

(22) Date of filing: **12.08.2013**

(51) Int Cl.:
***C08L 101/00*** *(2006.01)* ***C08K 5/13*** *(2006.01)*
***C08K 5/51*** *(2006.01)* ***C08K 5/5317*** *(2006.01)*
***C03C 27/12*** *(2006.01)*

(86) International application number:
**PCT/JP2013/071798**

(87) International publication number:
**WO 2014/027639 (20.02.2014 Gazette 2014/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.08.2012 JP 2012180520**

(71) Applicant: **Kureha Corporation**
**Chuo-ku**
**Tokyo 103-8552 (JP)**

(72) Inventors:
- **IWAMA, Hideki**
  **Tokyo 103-8552 (JP)**
- **TAKEUCHI, Aya**
  **Tokyo 103-8552 (JP)**

(74) Representative: **Hoffmann Eitle**
**Patent- und Rechtsanwälte PartmbB**
**Arabellastraße 30**
**81925 München (DE)**

(54) **RESIN COMPOSITION AND APPLICATION THEREFOR**

(57) The object of the present invention is to provide a resin composition that contains a near-infrared absorbent in which heat-induced discoloration is suppressed, and the resin composition is a resin composition made from a near-infrared absorbent, an antioxidant, and a resin, wherein the near-infrared absorbent is a particulate made from copper phosphonate represented by Formula (1) (wherein, R1 is a group represented by -CH2CH2-R11, and R11 indicates a hydrogen atom, an alkyl group, or an alkyl fluoride group)), and the antioxidant is at least one type selected from hindered phenol-based antioxidants and phosphorous-based antioxidants having not less than one structure represented by Formula (2) (wherein, R2 to R4 indicate alkyl groups and R5 to R8 indicate hydrogen atoms or alkyl groups.) bonded to a phosphorous atom in the molecule, and not having a structure represented by Formula (3) (wherein, R indicates an alkyl group.) bonded to the phosphorous atom in the molecule.

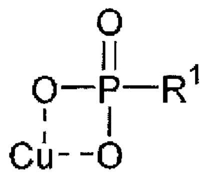
· · · (1)

EP 2 886 610 A1

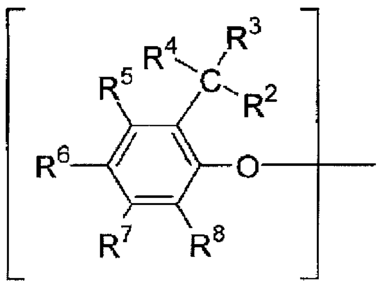

$\cdot\cdot\cdot$ (2)

[O-R] (3)

## Description

### TECHNICAL FIELD

The present invention relates to a resin composition and the application thereof, and specifically relates to a resin composition made from a near-infrared absorbent, an antioxidant, and resin, and the application thereof.

### BACKGROUND ART

Laminated glass has been used in the past in various applications, such as vehicles, e.g., cars, etc., buildings, and solar cells. Polyvinyl butyral resin film, ionomer resin film, and the like are known as interlayer films used in laminated glasses.

Incidentally, in addition to visible light, sunlight also includes ultraviolet rays, infrared rays, and the like. Infrared rays further include infrared rays whose wavelength is near that of visible light, which are called near-infrared rays. Near-infrared rays are also called thermic rays, which are one cause of temperature increases inside vehicles and buildings.

Providing laminated glass used in vehicles and buildings with heat ray absorbency, while maintaining transparency to visible light has been considered in order to control these temperature increases. For example, a copper salt composition is known that contains copper phosphonate, a polysiloxane ingredient, a plasticizer, and a dispersant (for example, see Patent Document 1). Generally, when resin compositions obtained by blending metal salts with a resin are exposed to high temperatures, the visible light transparency sometimes decrease and the resin sometimes yellows. However, Patent Document 1 discloses that a resin composition, which contains the aforementioned copper salt composition and a resin, can provide an infrared absorbing film of excellent visible light transparency and stability, even when exposed to high temperatures.

The resin composition described in Patent Document 1 suppressed yellowing when exposed to high temperatures compared with resin compositions made only from copper phosphonate and resin, but had the problem of increasing the number of processes because it required a process for dehydration condensation of the silane compound.

### CITATION LIST

#### Patent Literature

Patent Document 1: Japanese Patent Application Publication No. 2009-242650A

### SUMMARY OF INVENTION

#### Technical Problem

In consideration of the prior art, the object of the present invention is to provide a resin composition containing a near-infrared absorbent with suppressed heat-induced discoloration, i.e., yellowing.

#### Solution to Problem

As a result of research conducted to achieve the above object, the inventors discovered that a resin composition made from a specific near-infrared absorbent, a specific antioxidant, and resin is able to solve the aforementioned problems, and arrived at the present invention.

Namely, the resin composition of the present invention is a resin composition that is made from a near-infrared absorbent, an antioxidant, and a resin, wherein the near-infrared absorbent is a particulate made from a copper phosphonate represented by Formula (1), below, the antioxidant is not less than one type of antioxidant selected from hindered phenol-based antioxidants and phosphorous-based antioxidants having not less than one structure represented by Formula (2), below, bonded to the phosphorous atom in the molecule, and not having a structure represented by Formula (3), below, bonded to the phosphorous atom in the molecule.

[Formula 1]

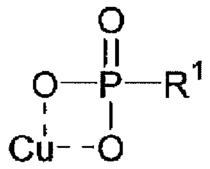

• • • (1)

(In Formula 1, $R^1$ is a univalent group represented by $-CH_2CH_2-R^{11}$, and $R^{11}$ indicates a hydrogen atom, an alkyl group having from 1 to 20 carbons, or an alkyl fluoride group having from 1 to 20 carbons.)

[Formula 2]

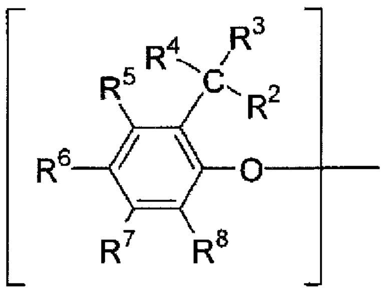

• • • (2)

(In Formula 2, $R^2$ to $R^4$ are each independently an alkyl group having 1 or 2 carbons, and $R^5$ to $R^8$ each independently indicates a hydrogen atom or an alkyl group having from 1 to 20 carbons;

provided, in cases where the molecule has not less than two of the structures represented by Formula (2), that $R^5$ to $R^8$ in one of the structures represented by Formula (2) may form crosslinks with $R^5$ to $R^8$ in the other of the structures represented by Formula (2).)

[Formula 3]

[O-R] (3)

(In Formula (3), R indicates an alkyl group.)

It is preferable that the aforementioned phosphorous-based antioxidant is a phosphorous-based antioxidant that has not less than two of the structures represented by the Formula (2) bonded to a phosphorous atom in the molecule, and does not have a structure represented by the Formula (3) bonded to a phosphorous atom in the molecule.

It is preferable that $R^2$ to $R^4$ in the Formula (2) is a methyl group.

It is preferable that the antioxidant is the aforementioned phosphorous-based antioxidant.

It is preferable that the resin is at least one type of resin selected from a polyvinylacetal resin, ethylene-vinyl acetate copolymer, (meth)acrylic resin, polyester resin, polyurethane resin, vinyl chloride resin, polyolefin resin, polycarbonate resin, and norbornene resin, and more preferably is a polyvinyl butyral resin or ethylene-vinyl acetate copolymer.

It is preferable the resin contains 0.05 to 30 parts by mass of near-infrared absorbent per 100 parts by mass of the aforementioned resin.

It is preferable the resin contains 0.01 to 30 parts by mass of antioxidant per 100 parts by mass of the aforementioned resin.

The laminated glass interlayer of the present invention is formed from the aforementioned resin composition.

The laminated glass of the present invention possesses the aforementioned laminated glass interlayer.

Advantageous Effects of Invention

The resin composition of the present invention suppresses heat-induced discoloration, i.e., yellowing.

DESCRIPTION OF EMBODIMENTS

The present invention will be specifically described below.

The resin composition of the present invention is a resin composition made from a near-infrared absorbent, an antioxidant, and a resin, wherein the near-infrared absorbent is a particulate made from a copper phosphonate represented by a Formula (1), described below, the antioxidant is not less than one type of antioxidant selected from a hindered phenol-based antioxidant and a phosphorous-based antioxidant having not less than one structure represented by a Formula (2), described below, bonded to a phosphorous atom in the molecule, and not having a structure represented by a Formula (3), described below, bonded to a phosphorous atom in the molecule.
Further, the resin composition of the present invention is also noted as a copper salt particulate dispersion resin.

(Near-infrared absorbent)

The near-infrared absorbent used in the present invention is a particulate made from a copper phosphonate represented by the Formula (1), below.
The particulate made from the copper phosphonate represented by Formula (1), below may be formed only from the copper phosphonate represented by Formula (1), or it may be formed from the copper phosphonate represented by the Formula (1) and other ingredients.

[Formula 4]

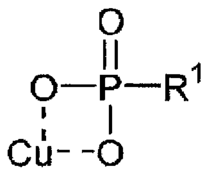

・・・(1)

(In Formula 1, $R^1$ is a univalent group represented by $-CH_2CH_2-R^{11}$, and $R^{11}$ indicates a hydrogen atom, an alkyl group having from 1 to 20 carbons, or an alkyl fluoride group having from 1 to 20 carbons.)
It is preferable that the aforementioned $R^{11}$ is a hydrogen atom or an alkyl group having 1 to 20 carbons. Specifically, it is preferable that $R^{11}$ is a hydrogen atom, methyl group, ethyl group, propyl group, butyl group, pentyl group, hexyl group, heptyl group, octyl group, nonyl group, decyl group, undecyl group, dodecyl group, tridecyl group, tetradecyl group, pentadecyl group, hexadecyl group, heptadecyl group, or octadecyl group. Further, only one type of the copper phosphonate represented by Formula (1) may be used alone, or two or more types may be used.
Further, in this Specification, the "copper phosphonate represented by Formula (1)" may also be noted simply as "copper phosphonate."
The method of manufacturing the particulate made from copper phosphonate used in the present invention is not specifically limited, but it can be manufactured, for example, by the following method.
An example method of manufacturing copper phosphonate particulate is a method having a step in which a reaction mixture is obtained by mixing a phosphonic acid compound represented by Formula (4), below, with a copper salt in a solvent, preferably in the presence of a dispersant (hereinafter, the reaction step), and a step in which copper phosphonate particulate are then obtained by removing the solvent in the reaction mixture (hereinafter, the solvent removal step).

[Formula 5]

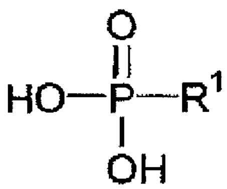

・・・(4)

(In Formula (4), $R^1$ is a univalent group represented by $-CH_2CH_2-R^{11}$, and $R^{11}$ indicates a hydrogen atom, an alkyl group having from 1 to 20 carbons, or an alkyl fluoride group having from 1 to 20 carbons.)
It is preferable in the phosphonic acid compound represented by the Formula (4) that $R^{11}$ is a hydrogen atom or an alkyl group having from 1 to 20 carbons. Examples of the phosphonic acid compound represented by Formula (4) include alkyl phosphonates such as ethyl phosphonate, propyl phosphonate, butyl phosphonate, pentyl phosphonate,

hexyl phosphonate, heptyl phosphonate, octyl phosphonate, nonyl phosphonate, decyl phosphonate, undecyl phosphonate, dodecyl phosphonate, tridecyl phosphonate, tetradecyl phosphonate, pentadecyl phosphonate, hexadecyl phosphonate, heptadecyl phosphonate, and octadecyl phosphonate. Further, only one type of the phosphonic acid compound represented by Formula (4) may be used alone, or two or more types may be used.

Copper salts capable of donating a divalent copper ion are commonly used as the aforementioned copper salt. The copper salt may also be a copper salt other than the copper phosphonate represented by Formula (1). Examples of the aforementioned copper salt include copper salts of organic acids, such as anhydrous copper acetate, anhydrous copper formate, anhydrous copper stearate, anhydrous copper benzoate, anhydrous copper ethylacetoaceate, anhydrous copper pyrophosphate, anhydrous copper naphthenate, and anhydrous copper citrate; hydrates or hydrides of these copper salts of organic acids; copper salts of inorganic acids, such as copper oxide, copper chloride, copper sulfate, copper nitrate, and basic copper carbonate; hydrates or hydrides of these copper salts of inorganic acids; and copper hydroxide. Further, only one type of the copper salt may be used alone, or two or more types may be used.

It is preferable to use anhydrous copper acetate or copper acetate monohydrate from the standpoints of solubility and removing by-products.

It is preferable to use a dispersant when manufacturing copper phosphonate particulate. It is preferable to use a dispersant because it improves the dispersibility of the copper phosphonate represented by Formula (1). Examples of the dispersant include at least one phosphate compound selected from phosphate compounds represented by Formula (3a) and phosphate compounds represented by Formula (3b), and compounds in which the phosphoric acid, i.e., hydroxyl group, in this phosphate compound is neutralized by a base. Further, examples of the base used for neutralization include inorganic bases, such as lithium hydroxide, sodium hydroxide, potassium hydroxide, cesium hydroxide, magnesium hydroxide, and calcium hydroxide.

[Formula 6]

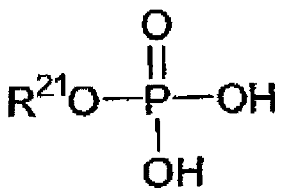
· · · (3 a)

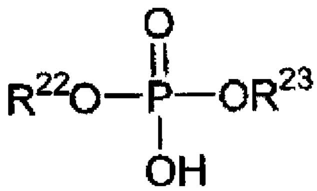
· · · (3 b)

(In Formulas (3a) and (3b), $R^{21}$, $R^{22}$, and $R^{23}$ are univalent groups represented by - $(CH_2CH_2O)_nR^{55}$, n is an integer of 4 to 35, and $R^{55}$ indicates an alkyl group having from 6 to 25 carbons or an alkylphenyl group having from 6 to 25 carbons; provided that $R^{21}$, $R^{22}$, and $R^{23}$ may each be the same or different.)

If n is less than 4, there are cases in which the transparency will be inadequate when manufacturing laminated glass, etc. Also, if n exceeds the aforementioned range, the quantity of phosphate compound required to obtain sufficiently transparent laminated glass, etc. tends to increase, which becomes cause of increased cost.

Additionally, $R^{55}$ is an alkyl group having from 6 to 25 carbons or an alkylphenyl group having from 6 to 25 carbons, preferably an alkyl group having from 6 to 25 carbons, and more preferably alkyl group having from 12 to 20 carbons. If $R^{55}$ is a group having fewer than 6 carbons, there are cases in which the transparency will be inadequate when manufacturing laminated glass, etc. Also, if $R^{55}$ is a group having more than 25 carbons, the quantity of phosphate compound required to obtain sufficiently transparent laminated glass, etc. tends to increase, which becomes cause of increased cost.

When obtaining the copper phosphonate particulate, it is preferable to use at least one of the phosphate compound represented by Formula (3a) and the phosphate compound represented by Formula (3b), and more preferable to use both the phosphate compound represented by Formula (3a) and the phosphate compound represented by Formula (3b). Using the phosphate compound represented by Formula (3a) and the phosphate compound represented by Formula (3b) is preferred as there is a tendency for superior transparency and heat resistance in laminated glasses and the like. When both the phosphate compound represented by Formula (3a) and the phosphate compound represented by Formula (3b) are used, the ratio of the phosphate compound represented by Formula (3a) and the phosphate compound represented by Formula (3b) is not specifically limited, but is normally a mole ratio from 10:90 to 90:10 ((3a):(3b)).

Additionally, one type of the phosphate compounds represented by Formula (3a) can be used alone or two or more may be used, and one type of the phosphate compounds represented by Formula (3b) can be used alone or two or more types may be used.

Commercially available phosphate compounds, e.g., DLP-8, DLP-10, DDP-6, DDP-8, DDP-10, TDP-6, TDP-8, TDP-10 (the above manufactured by Nikko Chemicals Co., Ltd.), and Plysurf A215C, Plysurf AL12H, Plysurf AL, Plysurf A208F, Plysurf A219B, Plysurf A210D (the above manufactured by Dai-ichi Kogyo Seiyaku Co., Ltd.), can be also used as the at least one phosphate compound selected from the phosphate compound represented by Formula (3a) and the phosphate compound represented by Formula (3b). Compounds can also be used in which the phosphoric acid, i.e., the hydroxyl group, in these phosphate compounds has been neutralized with a suitable base. Examples of bases used for neutralization include inorganic bases such as lithium hydroxide, sodium hydroxide, potassium hydroxide, cesium hydroxide, magnesium hydroxide, and calcium hydroxide.

Further, when manufacturing copper phosphonate particulate, it is preferable to use 0.5 to 1.5 moles, more preferably 0.8 to 1.2 moles, of the phosphonic acid compound represented by Formula (4) per 1 mole of the copper salt. Additionally, in cases where the dispersant is at least one phosphate compound selected from the phosphate compound represented by Formula (3a) and the phosphate compound represented by Formula (3b), and/or a compound in which the phosphoric acid in this phosphate compound, i.e., the hydroxyl group, is neutralized with a base, it is preferable to use 5 to 100 parts by mass, preferably 10 to 50 parts by mass, per 100 parts by mass of the copper salt.

Examples of the aforementioned solvent include alcohols, such as methanol, ethanol, isopropyl alcohol, and n-butyl alcohol; tetrahydrofuran (THF), dimethylformamide (DMF), and water, where methanol, ethanol or DMF are preferable from the perspective of accomplishing the reaction well. The reaction step preferably is performed under temperature conditions of room temperature to 60°C, more preferably from 20 to 40°C, and for from 0.5 to 50 hours, more preferably from 1 to 30 hours.

The phosphonic acid compound represented by Formula (4) and the copper salt are reacted in the reaction step, whereby the reaction produces fine particulate copper phosphonate that is not dissolved in the solvent. Because the at least one phosphate compound selected from phosphate compounds represented by Formula (3a) and phosphate compounds represented by Formula (3b) can act as a good dispersant during the reaction, the copper phosphonate maintains high dispersibility, whereby clumping can be suppressed.

Further, not only can the phosphonic acid compound represented by Formula (4) and copper salt be reacted in the reaction step, but, for example, the at least one phosphate compound selected from phosphate compounds represented by Formula (3a) and phosphate compounds represented by Formula (3b) may also be reacted with some of the copper salt. Some of the raw materials may also remain unreacted.

Further, the method of manufacturing copper phosphonate particulate normally yields copper phosphonate particulate by removing at least some of the solvent from the aforementioned reaction mixture.

In the solvent removal step, at least some of the solvent is removed from the reaction mixture. Besides solvent, the liquid ingredient in the reaction mixture may also be removed.

The heating conditions in the solvent removal step whereby at least some of the solvent normally is removed by heating the reaction mixture normally are room temperature to 70°C, preferably from 40 to 60°C. The solvent removal step may be performed under normal pressure, and may also be performed under reduced pressure. When the solvent removal step is performed under reduce pressure, there are cases in which heating does not have to be performed, and cases in which the heating temperature may be lowered.

Additionally, after the solvent removal step has been performed, a step may also be provided wherein the copper phosphonate particulate dispersed in a dispersion medium, and then the dispersion medium is removed for the purpose of removing impurities in the copper phosphonate particulate.

Copper phosphonate particulate with an average particle size of 1 to 1,000 nm normally are used as the aforementioned copper phosphonate particulate. In order to ensure dispersibility into a monomer and transparency of the resin composition, it is more preferable that the average particle size is 5 to 300 nm.

(Antioxidant)

The antioxidant used in the present invention is at least one antioxidant selected from hindered phenol-based antioxidants and phosphorous-based antioxidants that have not less than one of the structures represented by Formula (2) bonded to a phosphorous atom in the molecule, and do not have a structure represented by Formula (3) bonded to a phosphorous atom in the molecule. One type of antioxidant may be used, and two or more types may also be used.

Further, it is not clear why the resin composition of the present invention controls yellowing when heated, but the inventor hypothesized that the use of a specific antioxidant can suppress oxidation by oxygen during heating. Additionally, the resin composition of the present invention uses the aforementioned specific antioxidants, but it can also be obtained by a simple process because it is not necessary to provide a special step in the preparation of the resin

composition of this invention.

The resin composition of the present invention also tends to have excellent long-term heat-resistance since it contains a specific antioxidant.

[Formula 7]

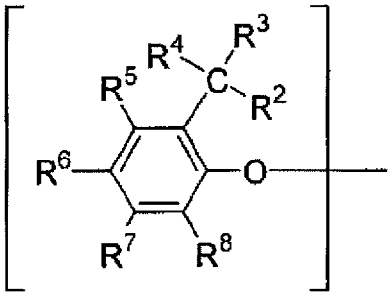

· · · (2)

(In Formula (2), $R^2$ to $R^4$ are each independently an alkyl group having 1 or 2 carbons, and $R^5$ to $R^8$ each independently indicates a hydrogen atom or an alkyl group having from 1 to 20 carbons;
provided, in cases where the molecule has two or more of the structures represented by Formula (2), that $R^5$ to $R^8$ in one of the structures represented by Formula (2) may form crosslinks with $R^5$ to $R^8$ in the other of the structures represented by Formula (2).)
[Formula 8]

[O-R] (3)

(In Formula (3), R indicates an alkyl group.)

Further, phosphorous-based antioxidants that have not less than one of the structures represented by the Formula (2) bonded to a phosphorous atom in the molecule, and do not have a structure represented by the Formula (3) bonded to a phosphorous atom in the molecule, are also noted as specific phosphorous-based antioxidants.

Commercially available products can be used as the aforementioned hindered phenol-based antioxidant without specific limitation. It is preferable that the hindered phenol-based antioxidant has a structure in which both ortho sites of the benzene ring having the hydroxyl group in the molecule is a t-butyl group, or has a structure in which one of these ortho sites is a t-butyl group and the other is a methyl group. Examples of the hindered phenol-based antioxidant include IRGANOX 1076 (manufactured by BASF) (hereinafter, Formula 11), 2,6-di-t-butyl-4-methylphenol (BHT, manufactured by Wako Pure Chemical Industries, Ltd.) (hereinafter Formula 12), ADK STAB AO-20 (manufactured by ADEKA Corp.) (hereinafter Formula 13), SUMILIZER GA-80 (manufactured by Sumitomo Chemical Co., Ltd.) (hereinafter Formula 14), IRGANOX 1010 (manufactured by BASF) (hereinafter Formula 15), IRGANOX 245 (manufactured by BASF) (hereinafter Formula 16), IRGANOX 259 (manufactured by BASF) (hereinafter Formula 17), IRGANOX 1098 (manufactured by BASF) (hereinafter Formula 18), IRGANOX 1135 (manufactured by BASF) (hereinafter Formula 19), IRGANOX 1330 (manufactured by BASF) (hereinafter Formula 20), SUMILIZER GM (manufactured by Sumitomo Chemical Co., Ltd.) (hereinafter Formula 36), SUMILIZER GS(F) (manufactured by Sumitomo Chemical Co., Ltd.) (hereinafter Formula 37), SUMILIZER BBM-S (manufactured by Sumika Chemtex Co., Ltd.) (hereinafter Formula 38), SUMILIZER MDP-S (manufactured by Sumitomo Chemical Co., Ltd.) (hereinafter Formula 39), and YOSHINOX 425 (manufactured by API Corp.) (hereinafter Formula 40) and the like. Further, only one type of hindered phenol-based antioxidant may be used, or two or more types may be used.

[Formula 9]

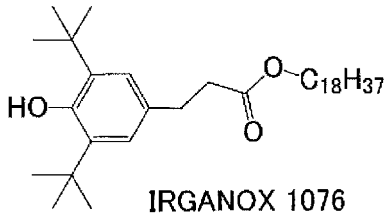

IRGANOX 1076 ・・・(1 1)

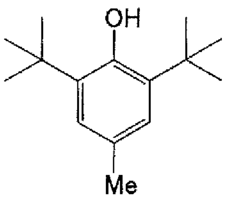

BHT ・・・(1 2)

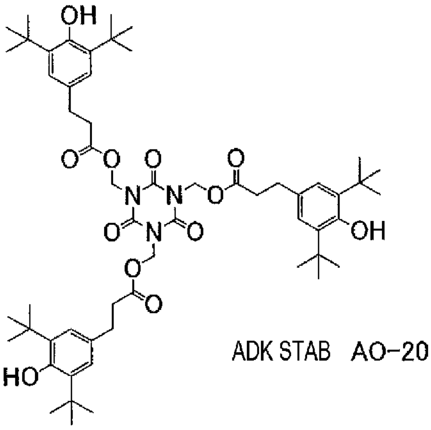

ADK STAB AO-20

・・・(1 3)

[Formula 10]

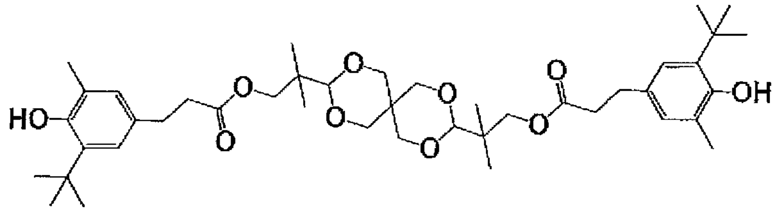

SUMILIZER GA-80

・・・(1 4)

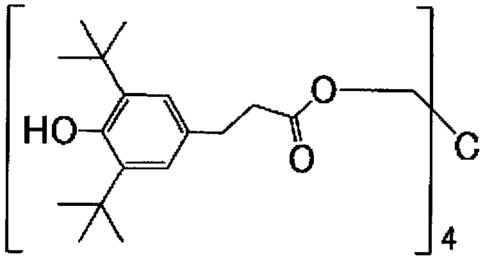

IRGANOX 1010

・・・(1 5)

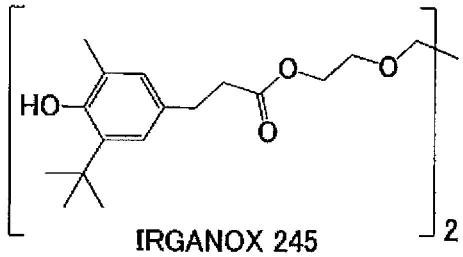

IRGANOX 245

・・・(1 6)

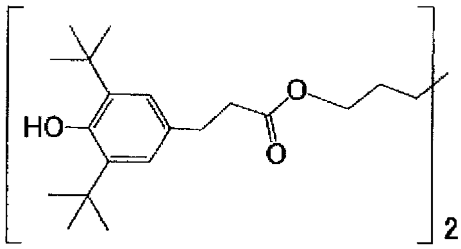

IRGANOX 259

・・・(1 7)

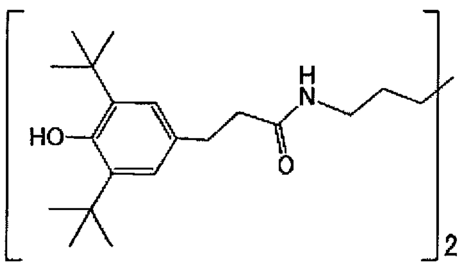

IRGANOX 1098

・・・(1 8)

[Formula 11]

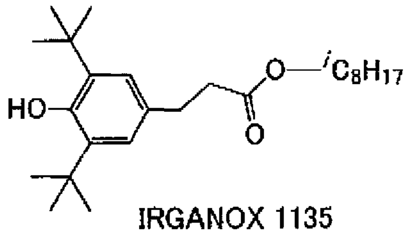

IRGANOX 1135 ・・・(19)

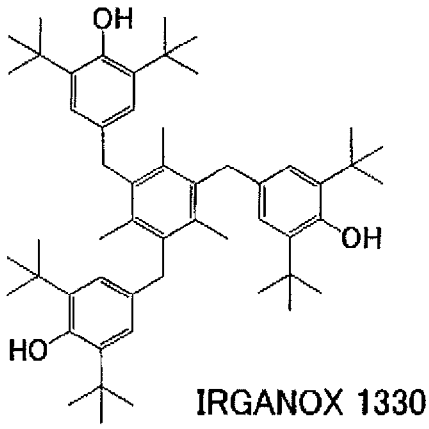

IRGANOX 1330 ・・・(20)

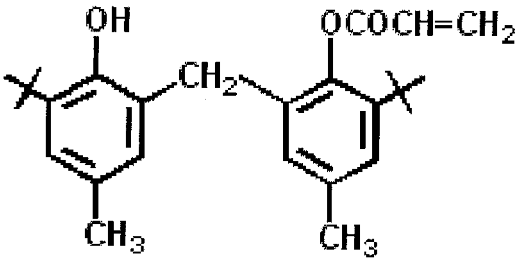

・・・ (36)

SUMILIZER GM

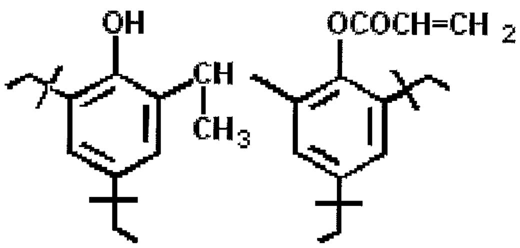

・・・ (37)

SUMILIZER GS(F)

[Formula 12]

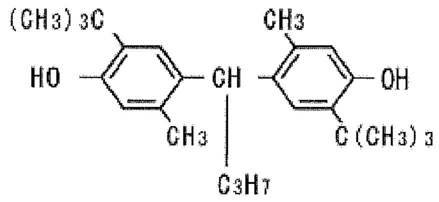

・・・(38)

SUMILIZER BBM-S

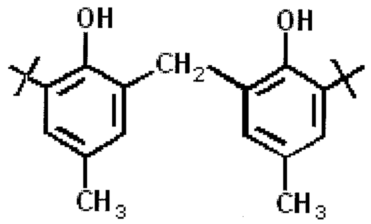

・・・(39)

SUMILIZER MDP-S

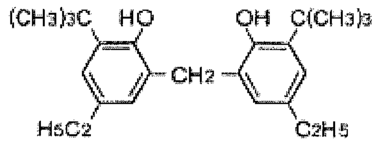

$C_{25}H_{36}O_2$ MOLECULAR WEIGHT 369 ・・・(40)

YOSHINOX 425

It is preferable that the specific phosphorous-based antioxidant has not less than two structures represented by Formula (2) bonded to the phosphorous atom in the molecule. Namely, it is preferable that the phosphorous-based antioxidant is a phosphorous-based antioxidant that has not less than two of the structures represented by Formula (2) bonded to a phosphorous atom in the molecule, and does not have the structure represented by the Formula (3) bonded to a phosphorous atom in the molecule.

Further, the aforementioned specific phosphorous-based antioxidant has at least 1 phosphorous atom in the molecule thereof. The phosphorous atom that constitutes the specific phosphorous-based antioxidant normally has a +3 valence.

It is preferable to use the aforementioned phosphorous-based antioxidant as the antioxidant, as the weather resistance thereof is excellent.

As described above, in Formula (2), $R^2$ to $R^4$ each independently are alkyl groups having 1 or 2 carbons.

In the Formula (2), $R^5$ to $R^8$ are each independently a hydrogen atom or alkyl group having from 1 to 20 carbons, preferably a hydrogen atom or alkyl group having from 1 to 7 carbons.

In cases where the molecule has two or more of the structures represented by Formula (2), $R^5$ to $R^8$ in one of the structures represented by Formula (2) may form crosslinks with $R^5$ to $R^8$ in the other of the structures represented by Formula (2). In cases where $R^5$ to $R^8$ in one of the structures represented by Formula (2) form crosslinks with $R^5$ to $R^8$ in the other of the structures represented by Formula (2), examples of the crosslink structures include single bonds and alkylene groups having from 1 to 4 carbons, and single bonds are preferred.

In Formula (2), the ortho site substitution group of the molecule having the oxygen atom, i.e., the group constituted by a carbon atom and $R^2$ to $R^4$, is a bulky alkyl group, specifically a tertiary alkyl group. Specifically, $R^2$ to $R^4$ are each independently an alkyl group having 1 or 2 carbons, preferably a methyl group.

Additionally, in Formula (2), it is preferable that $R^6$ is an alkyl group having from 1 to 7 carbons. It is also preferable that $R^6$ is a bulky alkyl group, and specifically is preferably a secondary or tertiary alkyl group, more preferably a tertiary alkyl group, and especially preferably a t-butyl group.

Additionally, it is preferable that $R^7$ in Formula (2) is a hydrogen atom or an alkyl group having from 1 to 2 carbons.

Additionally, it is preferable that $R^8$ in Formula (2) is an alkyl group having from 1 to 7 carbons. It is also preferable that $R^8$ is a bulky alkyl group, and specifically is preferably a tertiary alkyl group, more preferably a t-butyl group.

Commercially available products can be used as the aforementioned specific phosphorous-based antioxidant without specific limitation. IRGAFOS 168 (manufactured by BASF) (hereinafter Formula 21), GSY-P101 (manufactured

by Sakai Chemical Industry Co., Ltd.) (hereinafter Formula 22), and SUMILIZER GP (manufactured by Sumitomo Chemical Co., Ltd.) (hereinafter Formula 23) can be used as the specific phosphorous-based antioxidant. One type of specific phosphorous-based antioxidant may be used, and two or more types may also be used.

[Formula 13]

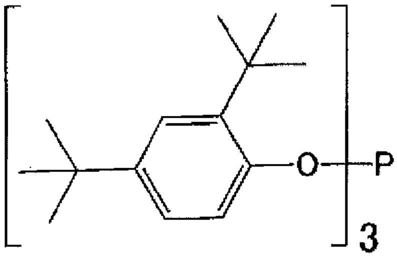

IRGAFOS 168 · · · (21)

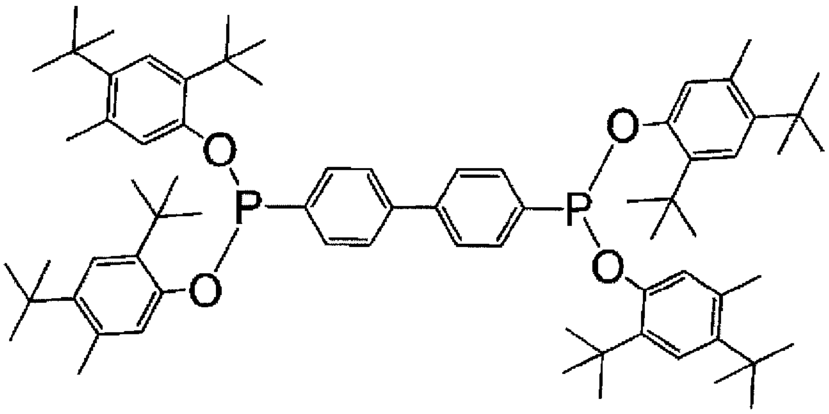

· · · (22)

GSY-P101

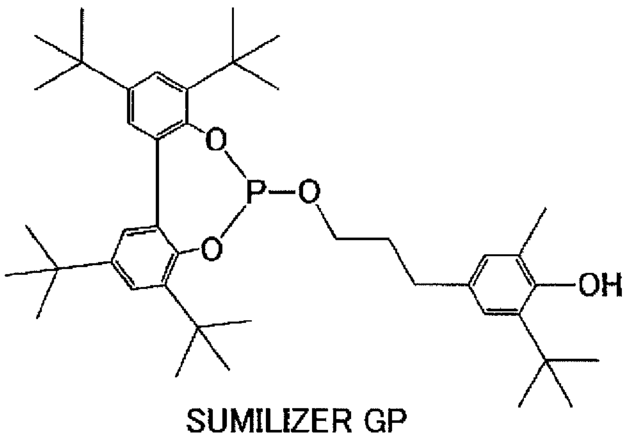

SUMILIZER GP · · · (23)

It is preferable that the specific phosphorous-based antioxidant has not less than two of the structures represented by Formula (2) bonded to a phosphorous atom in the molecule, as described above, and IRGAFOS 168 has 3 of the structures represented by Formula (2) bonded to a phosphorous atom in the molecule, GSY-P101 has 4 of the structures represented by Formula (2) bonded to a phosphorous atom in the molecule, and SUMILIZER GP has two of the structures represented by Formula (2) bonded to a phosphorous atom in the molecule.

In the aforementioned SUMILIZER GP, $R^8$ in one of the structures represented by Formula (2) is crosslinked by a single bond to $R^8$ in the other structure represented by Formula (2).

Further, from the perspective of controlling yellowing, a phosphorous-based antioxidant that has one phosphorous atom in the molecule and has 3 of the structures represented by Formula (2) bonded to the phosphorous atom in

the molecule is most preferred as the specific phosphorous-based antioxidant used in the present invention.

Also, the specific phosphorous-based antioxidant used in the present invention does not have a structure represented by Formula (3) bonded to a phosphorous atom in the molecule. Further, the inventors discovered that having this structure made it likely that yellowing would occur. The specific reasons as to why yellowing is likely to occur are unclear, but the inventors hypothesized that one factor causing yellowing was that the structure represented by Formula (3) is hydrolyzed by heating.

Further, IRGAFOS 38 (manufactured by BASF) used in Comparative Example 2 can be given as an example that does not correspond to the specific phosphorous-based antioxidant because, while it has two of the structures represented by Formula (2) bonded to a phosphorous atom in the molecule, it also has a structure represented by Formula (3) bonded to the phosphorous atom. It was found that in an aspect using this IRGAFOS 38, yellowing is caused by heating.

Additionally, other structures of the specific phosphorous-based antioxidant are not specifically limited as long as they may have one structure represented by Formula (2) bonded to the phosphorous atom in the molecule, and not have a structure represented by Formula (3) bonded to the phosphorous atom in the molecule, but it may also have a hindered phenol structure in the molecule thereof.

The antioxidant used in the present invention is at least one type of antioxidant selected from hindered phenol-based antioxidants and specific phosphorous-based antioxidants, as described above. Resin compositions of the present invention that use this kind of specific antioxidant are preferred for their long-term heat resistance. Further, having excellent long-term heat resistance means that there was little yellowing (discoloration) when long-term heat resistance testing (for example, held for 735 hours at a temperature of 100°C) was performed.

[Resin]

Resin is used in the present invention. The resin used in the present invention is not specifically limited as long as it can disperse the near-infrared absorbent described above, and, for example, the following resins can be used.

Using at least one type of resin selected from a polyvinylacetal resin, ethylene-vinyl acetate copolymer, (meth)acrylic resin, polyester resin, polyurethane resin, vinyl chloride resin, polyolefin resin, polycarbonate resin, and norbornene resin, as the resin used in the present invention is preferable because near-infrared absorbent can be well dispersed and transparency to visible light is excellent.

It is more preferable that the resin used in the present invention is at least one type of resin selected from a polyvinyl acetal resin and an ethylene-vinyl acetate copolymer, especially preferable that it is at least one type of resin selected from a polyvinyl butyral resin (PVB) and an ethylene-vinyl acetate copolymer, and most preferably that it is a polyvinyl butyral resin or an ethylene-vinyl acetate copolymer. It is preferable to use a polyvinyl acetal resin, as dispersibility of the near-infrared absorbent described above is excellent; and, when manufacturing optical materials using the resin composition of the present invention, adhesion to glass and the like is excellent, the resin composition of this invention is pliable, and the near-infrared absorbent is not susceptible to degradation accompanying temperature changes. Using a polyvinyl butyral (PVB) resin as the polyvinyl acetal resin is preferable from the perspectives of glass adhesion, dispersibility, transparency, heat resistance, light resistance, and the like.

The polyvinyl acetal resin may be a blend combining two or more types, according to the required physical properties, and may also be a polyvinyl acetal resin obtained by acetalation by combination with aldehyde during acetalation. The molecular weight, molecular weight distribution and degree of acetalation of the polyvinyl acetal resin are not specifically limited, but acetalation is commonly from 40 to 85%, preferably with a minimum of 60% and maximum of 75%.

Polyvinyl acetal resin can be obtained by acetalating polyvinyl alcohol resin with aldehyde. The above polyvinyl alcohol resin generally is obtained by saponification of polyvinyl acetate, and polyvinyl alcohol resins with from 80 to 99.8 mole% saponification are generally used. The viscosity-average degree of polymerization of the above polyvinyl acetal resin preferably is a minimum of 200 and a maximum of 3,000. When less than 200, there are cases where the penetration resistance of the resulting laminated glass is decreased. When 3,000 is exceeded, there are cases where the formability of the resin composition becomes poor, and moreover, the rigidity of the resin composition becomes too great and workability becomes worse. More preferably, the minimum is 500 and the maximum is 2,200. Further, the viscosity-average degree of polymerization and level of saponification of the polyvinyl alcohol resin can be measured based on, for example, JISK 6726 "Polyvinyl Alcohol Measurement Methods."

The aldehyde is not specifically limited, and examples thereof include aldehydes having from 1 to 10 carbons, and more specifically, e.g., n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetoaldehyde, and benzaldehyde. Among these, n-butylaldehyde, n-hexylaldehyde, n-valeraldehyde, and the like are preferred. More preferable is butylaldehyde having 4 carbons.

Additionally, ethyl-vinylacetate copolymers have excellent dispersibility of the near-infrared absorbent, described above, and are preferable from the perspectives of glass adhesion, dispersibility, transparency, heat resistance,

and light resistance.

(Resin composition)

The resin composition of the present invention is a resin composition that is made from a near-infrared absorbent, an antioxidant, and a resin, as described above.

As long as the resin composition of the present invention is a composition made from a near-infrared absorbent, an antioxidant, and a resin, as described above, the method of manufacture is not specifically limited. An example of the method of manufacturing the resin composition of the present invention includes a method in which, for example, a dispersion of a resin, an antioxidant, and a near-infrared absorbent is added to a solvent, such as toluene, an ethanol/toluene mixed solvent, methanol, a methanol/toluene mixed solvent, methylene chloride, or chloroform, stirred, and then exposed to ultrasonic irradiation, etc. to dissolve the resin and yield a dispersion, and then the solvent is removed from the dispersion. Further, the aforementioned near-infrared absorbent dispersion can be prepared by dispersing a near-infrared absorbent into toluene, methanol, methylene chloride, or chloroform.

The resin composition of the present invention preferably contains from 0.05 to 30 parts by mass, more preferably from 0.1 to 20 parts by mass of the near-infrared absorbent, per 100 parts by mass of the aforementioned resin. If there is less than 0.05 parts by mass, there is a possibility that sufficient near-infrared absorbent characteristics will not be obtained, and if there is more than 30 parts by mass, there is a risk of vastly decreasing the transparency and adhesion in the resin.

It is preferable that the resin composition of the present invention contains from 0.01 to 30 parts by mass, more preferably from 0.03 to 10 parts by mass, of antioxidant per 100 parts by mass of the aforementioned resin. If there is less than 0.01 parts by mass, it is possible that yellowing will not be sufficiently suppressed, and if there is more than 30 parts by mass, there is a risk that the antioxidant itself will decompose, causing discoloration, precipitation of the solid antioxidant and loss of the transparency of the resin.

The resin composition of the present invention has excellent near-infrared absorbency, and can be appropriately used as an interlayer for structural materials, such as laminated glass, as it controls heat-induced discoloration, i.e., yellowing.

Additionally, the resin composition of the present invention may also contain various types of additives. Examples of additives include plasticizers, dispersants, crosslinking agents, chelating agents, antioxidants, ultraviolet absorbents, light stabilizers, and color tone correcting agents. These additives may be added during the manufacture of the resin composition of the present invention, or may be added during the respective production of the near-infrared absorbent, antioxidant, or resin.

(Resin Composition Applications)

The resin composition of the present invention normally is used in applications that demand that near infrared radiation is absorbed.

A resin membrane formed from the resin composition of the present invention will have excellent near-infrared absorbency, suppresses heat-induced discoloration, i.e., yellowing, and can appropriately be used as interlayers in construction materials, such as interlayers in laminated glass.

Additionally, laminated glass of the present invention has the aforementioned interlayer for laminated glass. The glass that constitutes the laminated glass of the present invention is not specifically limited and any such glass commonly known in the past can be used.

## EXAMPLES

Working examples of the present invention are described in greater detail below, but the present invention is not limited thereby.

(Manufacturing Example 1)

(Preparation of copper salt dispersion)

1.164 gm (5.83 mmol) of copper acetate monohydrate and 35 gm of ethanol were added to a 200 mL eggplant type flask, stirred at 20°C to completely dissolve and yield a solution (Solution A).

In a separate container, 0.291 gm of Plysurf A219B (manufactured by Dai-ichi Kogyo Seiyaku Co., Ltd.) and 0.793 gm of n-butylphosphonic acid were dissolved into 20 gm of ethanol to yield a solution (Solution B).

The resulting Solution B was dripped over 3 hours into solution A. After stirring this reaction solution for 14

hours at 20°C, the solvent was distilled out with an evaporator (60°C water bath). 30 gm of toluene were added to this solution, which was then evaporated until reaching a constant weight. A 1.44 gm yield (99% yield) of bluish green solid was obtained. 30 gm of toluene were added to this and subjected to ultrasonic irradiation for 3 hours to produce a copper phosphonate toluene dispersion (1).

(Manufacturing Example 2)

(Synthesis of copper ethylphosphonate)

32.34 gm of ethylphosphonic acid were dissolved in 500 mL of methanol in a reactor vessel, 58.67 gm of copper acetate monohydrate were added to this and heated to reflux for 4 hours to yield a suspension.

The resulting suspension was filtered and the residue rinsed twice with 500 mL of methanol, and then dried for 2 hours at 200°C to yield 49.79 gm (99% yield) of light blue powder (copper ethylphosphonate).

(Pulverizing copper salt powder)

15 mL of 0.3 mm-diameter zirconia beads, 14.2 gm of toluene, 0.4 gm of the aforementioned copper ethylphosphonate, and 0.4 gm of TDP-8 (manufactured by Nikko Chemicals Co., Ltd.) were added to a 45 mL zirconia vessel and set in a Pulverisette planetary ball mill (manufactured by FRITSCH). The copper salt was pulverized by operating the ball mill under conditions of 500 rpm rotation and 48 hours of operation time (after 1 hour of operation, stopped and cooled for 30 minutes). After pulverization, the resulting copper salt toluene dispersion was collected. The vessel and beads were further rinsed several times with approximately 13 gm of toluene to recover their contents, and a total 28 gm of copper ethylphosphonate toluene dispersion (1) (2) were prepared. The average particle size of the pulverized copper ethylphosphonate was 75 nm.

(Working Example 1)

(Preparation of particulate copper salt-dispersed resin)

2.43 gm of triethylene glycol bis(2-ethylhexanoate) (3GO, plasticizer), 300 mL of toluene, and 6.38 gm of polyvinyl butyral (PVB) were added to a 300 mL Erlenmeyer flask. 64 mg of IRGAFOS 168 (manufactured by BASF) were then added.

4.02 gm of the above copper phosphonate toluene dispersion (1) (containing 0.746 mmol copper salt) were then added to this flask and stirred for 14 hours at 20°C, and then subjected to ultrasonic irradiation for 1 hour to uniformly dissolve the PVB.

This dispersion was spread on a Teflon (registered trademark) tray and air dried for 12 hours at 20°C. This product was then vacuum dried at 70°C for another 4 hours to completely remove the solvent and yield a PVB resin with copper salt particulate dispersed therein (1).

(Evaluation)

<Resin sheet preparation>

The particulate copper salt-dispersed PVB resin (1) was preheated for 1 minute at 120°C, 3 MPa using a 0.8 mm-thick mold and a compression molding machine manufactured by SHINTO Metal industries Corp., and then pressed for 3 minutes at 15 MPa to yield a resin sheet (1).

The resin sheet (1) was preheated for 1 minute at 200°C, 3 MPa using a 0.8 mm-thick mold and a compression molding machine manufactured by SHINTO Metal industries Corp., and then pressed for 15 minutes at 10 MPa to yield a resin sheet (2).

<Preparation of measurement sample (1) >

The resin sheet (1) was sandwiched on both sides with slide glass (1.2 to 1.5 mm-thick) laminated on a 70°C plate to produce laminated glass (1).

This laminated glass (1) was heated for 0.5 hours at 130°C inside an autoclave in a nitrogen atmosphere at 1.5 MPa pressure to yield a measurement sample (1) with slide glass disposed on both sides of a resin sheet.

<Preparation of measurement sample (2) >

A measurement sample (2) with slide glass disposed on both sides of a resin sheet was prepared and obtained in the same manner as the measurement sample (1), except that resin sheet (1) was substituted with resin sheet (2).

<Evaluation of heat resistance>

The spectra of each of the aforementioned measurement samples (1) and (2) were measured by the following method.

A spectrophotometer (model U-4000, manufactured by Hitachi, Ltd.) was used to measure the spectra of these measurement samples in the 250 to 2,500 nm wavelength range. The tristimulus values (X, Y, Z) were calculated using a C light source.

The YI (yellow index) of measurement sample (1) was 4.1, and the YI for measurement sample (2) was 7.4. Further, the value for YI was calculated by the following equation.

$$YI = (128X - 106Z) / Y$$

Where the difference between the YI values of measurement sample (1) and measurement sample (2) (YI of measurement sample (2) - YI of measurement sample (1)) is $\Delta$YI, $\Delta$YI was 3.3.

(Comparative Example 1)

(Preparation of particulate copper salt-dispersed resin)

A particulate copper salt-dispersed PVB resin (c1) was obtained in the same manner as in the paragraph Working Example 1 (Preparation of particulate copper salt-dispersed resin), except that IRGAFOS 168 was not used.

(Evaluation)

<Preparation of resin sheets>

Resin sheets (c1) and (c2) were obtained in the same manner as in the paragraph Working Example 1 (Preparation of resin sheet), except that the particulate copper salt-dispersed PVB resin (1) was substituted with particulate copper salt-dispersed PVB resin (c1).

<Preparation of measurement sample (c1)>

A measurement sample (c1) was prepared in the same manner as in the paragraph Working Example 1 (Preparation of measurement sample (1)), except that resin sheet (1) was substituted with resin sheet (c1).

<Preparation of measurement sample (c2)>

A measurement sample (c2) was prepared in the same manner as in the paragraph Working Example 1 (Preparation of measurement sample (2)), except that resin sheet (2) was substituted with resin sheet (c2).

<Evaluation of heat resistance>

The spectra of the measurement sample (c1) and measurement sample (c2) were measured in the same manner as shown in the paragraph Working Example 1 (Evaluation of heat resistance).

YI of measurement sample (c1) was 2.8 and YI of measurement sample (c2) was 12.6. $\Delta$YI of measurement sample (c1) and measurement sample (c2) was 9.8.

(Working Example 2)

(Preparation of particulate copper salt-dispersed resin)

A particulate copper salt-dispersed PVB resin (2) was obtained in the same manner as in the paragraph Working Example 1 (Preparation of particulate copper salt-dispersed resin), except that the 64 mg of IRGAFOS 168 was substituted with 54 mg of GSY-P101 (manufactured by Sakai Chemical Industry Co., Ltd.).

(Evaluation)

<Preparation of resin sheets>

Resin sheets (3) and (4) were obtained in the same manner as in the paragraph Working Example 1 (Preparation of resin sheet), except that the particulate copper salt-dispersed PVB resin (1) was substituted with particulate copper salt-dispersed PVB resin (2).

<Preparation of measurements sample (3) >

A measurement sample (3) was prepared and obtained in the same manner as in the paragraph Working Example 1 (Preparation of measurement sample (1)), except that resin sheet (1) was substituted with resin sheet (3).

<Preparation of measurement sample (4)>

A measurement sample (4) was prepared and obtained in the same manner as in the paragraph Working Example 1 (Preparation of measurement sample (2)), except that resin sheet (2) was substituted with resin sheet (4).

<Evaluation of heat resistance>

The spectra of the measurement sample (3) and measurement sample (4) were measured in the same manner as shown in the paragraph Working Example 1 (Evaluation of heat resistance).
YI of measurement sample (3) was 3.5 and YI of measurement sample (4) was 7.9. ΔYI of measurement sample (3) and measurement sample (4) was 4.4.

(Working Example 3)

(Preparation of particulate copper salt-dispersed resin)

A particulate copper salt-dispersed PVB resin (3) was obtained in the same manner as in the paragraph Working Example 1 (Preparation of particulate copper salt-dispersed resin), except that the 64 mg of IRGAFOS 168 was substituted with 32 mg of SUMILIZER GP (manufactured by Sumitomo Chemical Co., Ltd.).

(Evaluation)

<Preparation of resin sheets>

Resin sheets (5) and (6) were obtained in the same manner as in the paragraph Working Example 1 (Preparation of resin sheets), except that the particulate copper salt-dispersed PVB resin (1) was substituted with particulate copper salt-dispersed PVB resin (3).

<Preparation of measurement sample (5) >

A measurement sample (5) was obtained in the same manner as in the paragraph Working Example 1 (Preparation of measurement sample (1)), except that resin sheet (1) was substituted with resin sheet (5).

<Preparation of measurement sample (6) >

A measurement sample (6) was obtained in the same manner as in the paragraph Working Example 1 (Preparation of measurement sample (2)), except that resin sheet (2) was substituted with resin sheet (6).

<Evaluation of heat resistance>

The spectra of the measurement sample (5) and measurement sample (6) were measured in the same manner as shown in the paragraph Working Example 1 (Evaluation of heat resistance).

YI of measurement sample (5) was 3.1 and YI of measurement sample (6) was 10.6. ΔYI of measurement sample (3) and measurement sample (6) was 7.5.

(Comparative Example 2)

(Preparation of particulate copper salt-dispersed resin)

A particulate copper salt-dispersed PVB resin (c2) was obtained in the same manner as in the paragraph Working Example 1 (Preparation of particulate copper salt-dispersed resin), except that the 64 mg of IRGAFOS 168 was substituted with 52 mg of IRGAFOS 38 (manufactured by BASF) (hereinafter Formula 31).

[Formula 14]

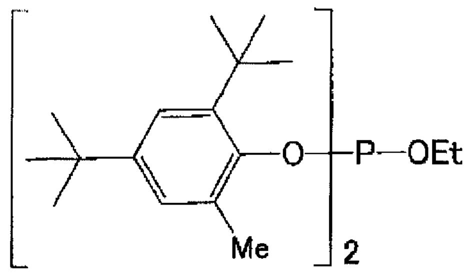

IRGAFOS 38 ・・・(31)

(Evaluation)

<Preparation of resin sheets>

Resin sheets (c3) and (c4) were obtained in the same manner as in the paragraph Working Example 1 (Preparation of resin sheets), except that the particulate copper salt-dispersed PVB resin (1) was substituted with particulate copper salt-dispersed PVB resin (c2).

<Preparation of measurement sample (c3)>

A measurement sample (c3) was prepared in the same manner as in the paragraph Working Example 1 (Preparation of measurement sample (1)), except that resin sheet (1) was substituted with resin sheet (c3).

<Preparation of measurement sample (c4)>

A measurement sample (c4) was prepared in the same manner as in the paragraph Working Example 1 (Preparation of measurement sample (2)), except that resin sheet (2) was substituted with resin sheet (c4).

<Evaluation of heat resistance>

The spectra of the measurement sample (c3) and measurement sample (c4) were measured in the same manner as shown in the paragraph Working Example 1 (Evaluation of heat resistance).

YI of measurement sample (c3) was 4.0 and YI of measurement sample (c4) was 35.3. ΔYI of measurement sample (c3) and measurement sample (c4) was 31.3.

(Working Example 4)

(Preparation of particulate copper salt-dispersed resin)

1.90 gm of triethylene glycol bis(2-ehtylhexanoate), 250 mL of methylene chloride, and 50 mg of IRGAFOS 168 (manufactured by BASF) were added to a 300 mL beaker.

7.0 gm of the copper ethylphosphonate toluene dispersion (2) above (containing 0.10 gm of copper ethylphosphonate) were added to this beaker, and then 5.00 gm of polyvinyl butyral (PVB) were added. The PVB was then uniformly dissolved by stirring for 1 hour at 20°C.

This dispersion was spread on a Teflon (registered trademark) tray and air dried for 12 hours at 20°C. This product was then vacuum dried at 70°C for another 3 hours to completely remove the solvent and yield a particulate copper salt-dispersed PVB resin (4).

(Evaluation)

<Preparation of resin sheets>

Resin sheets (7) and (8) were obtained in the same manner as in the paragraph Working Example 1 (Preparation of resin sheets), except that the particulate copper salt-dispersed PVB resin (1) was substituted with particulate copper salt-dispersed PVB resin (4).

<Preparation of measurement sample (7)>

A measurement sample (7) was prepared in the same manner as in the paragraph Working Example 1 (Preparation of measurement sample (1)), except that resin sheet (1) was substituted with resin sheet (7).

<Preparation of measurement sample (8)>

A measurement sample (8) was prepared in the same manner as in the paragraph Working Example 1 (Preparation of measurement sample (2)), except that resin sheet (2) was substituted with resin sheet (8).

<Evaluation of heat resistance>

The spectra of the measurement sample (7) and measurement sample (8) were measured in the same manner as shown in the paragraph Working Example 1 (Evaluation of heat resistance).

YI of measurement sample (7) was 1.2 and YI of measurement sample (8) was 4.2. ΔYI of measurement sample (7) and measurement sample (8) was 3.0.

(Working Example 5)

(Preparation of particulate copper salt-dispersed resin)

A particulate copper salt-dispersed PVB resin (5) was obtained in the same manner as in the paragraph Working Example 4 (Preparation of particulate copper salt-dispersed resin), except that the 50 mg of IRGAFOS 168 was substituted with 50 mg of SUMILIZER GP (manufactured by Sumitomo Chemical Co., Ltd.).

(Evaluation)

<Preparation of resin sheets>

Resin sheets (9) and (10) were obtained in the same manner as in the paragraph Working Example 1 (Preparation of resin sheets), except that the particulate copper salt-dispersed PVB resin (1) was substituted with particulate copper salt-dispersed PVB resin (5).

<Preparation of measurement sample (9)>

A measurement sample (9) was prepared in the same manner as in the paragraph Working Example 1 (Preparation of measurement sample (1)), except that resin sheet (1) was substituted with resin sheet (9).

<Preparation of measurement sample (10)>

A measurement sample (10) was prepared in the same manner as in the paragraph Working Example 1 (Preparation of measurement sample (2)), except that resin sheet (2) was substituted with resin sheet (10).

<Evaluation of heat resistance>

The spectra of the measurement sample (9) and measurement sample (10) were measured in the same manner as shown in the paragraph Working Example 1 (Evaluation of heat resistance).
YI of measurement sample (9) was 1.2 and YI of measurement sample (10) was 5.3. ΔYI of measurement sample (9) and measurement sample (10) was 4.1.

(Comparative Example 3)

(Preparation of particulate copper salt-dispersed resin)

A particulate copper salt-dispersed PVB resin (c3) was obtained in the same manner as in the paragraph Working Example 4 (Preparation of particulate copper salt-dispersed resin), except that the IRGAFOS 168 was not used.

(Evaluation)

<Preparation of resin sheets>

Resin sheets (c5) and (c6) were obtained in the same manner as in the paragraph Working Example 1 (Preparation of resin sheets), except that the particulate copper salt-dispersed PVB resin (1) was substituted with particulate copper salt-dispersed PVB resin (c3).

<Preparation of measurement sample (c5)>

A measurement sample (c5) was prepared in the same manner as in the paragraph Working Example 1 (Preparation of measurement sample (1)), except that resin sheet (1) was substituted with resin sheet (c5).

<Preparation of measurement sample (c6)>

A measurement sample (c6) was prepared in the same manner as in the paragraph Working Example 1 (Preparation of measurement sample (2)), except that resin sheet (2) was substituted with resin sheet (c6).

<Evaluation of heat resistance>

The spectra of the measurement sample (c5) and measurement sample (c6) were measured in the same manner as shown in the paragraph Working Example 1 (Evaluation of heat resistance).
YI of measurement sample (c5) was 1.5 and YI of measurement sample (c6) was 7.5. ΔYI of measurement sample (c5) and measurement sample (c6) was 6.0.

(Comparative Example 4)

(Preparation of particulate copper salt-dispersed resin)

A particulate copper salt-dispersed PVB resin (c4) was obtained in the same manner as in the paragraph Working Example 4 (Preparation of particulate copper salt-dispersed resin), except that the 50 mg of IRGAFOS 168 was substituted with 50 mg of ADK STAB AO-503A (manufactured by ADEKA Corp.) (hereinafter Formula 32).

[Formula 15]

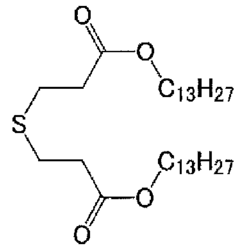

ADK STAB AO-503A
(THIOETHER-BASED ANTIOXIDANT) ・・・(32)

(Evaluation)

<Preparation of resin sheets>

Resin sheets (c7) and (c8) were obtained in the same manner as in the paragraph Working Example 1 (Preparation of resin sheets), except that the particulate copper salt-dispersed PVB resin (1) was substituted with particulate copper salt-dispersed PVB resin (c4).

<Preparation of measurement sample (c7)>

A measurement sample (c7) was obtained in the same manner as in the paragraph Working Example 1 (Preparation of measurement sample (1)), except that resin sheet (1) was substituted with resin sheet (c7).

<Preparation of measurement sample (c8)>

A measurement sample (c8) was obtained in the same manner as in the paragraph Working Example 1 (Preparation of measurement sample (2)), except that resin sheet (2) was substituted with resin sheet (c8).

<Evaluation of heat resistance>

The spectra of the measurement sample (c7) and measurement sample (c8) were measured in the same manner as shown in the paragraph Working Example 1 (Evaluation of heat resistance).

YI of measurement sample (c7) was 1.5 and YI of measurement sample (c8) was 25.2. ΔYI of measurement sample (c7) and measurement sample (c8) was 23.7.

(Comparative Example 5)

(Preparation of particulate copper salt-dispersed resin)

A particulate copper salt-dispersed PVB resin (c5) was obtained in the same manner as in the paragraph Working Example 4 (Preparation of particulate copper salt-dispersed resin), except that the 50 mg of IRGAFOS 168 was substituted with 50 mg of ADK STAB C (manufactured by ADEKA Corp.) (hereinafter Formula 33).

[Formula 16]

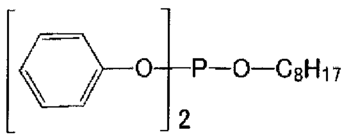

Adk Stab C ・・・(33)

(Evaluation)

<Preparation of resin sheets>

Resin sheets (c9) and (c10) were obtained in the same manner as in the paragraph Working Example 1 (Preparation of resin sheets), except that the particulate copper salt-dispersed PVB resin (1) was substituted with particulate copper salt-dispersed PVB resin (c5).

<Preparation of measurement sample (c9)>

A measurement sample (c9) was obtained in the same manner as in the paragraph Working Example 1 (Preparation of measurement sample (1)), except that resin sheet (1) was substituted with resin sheet (c9).

<Preparation of measurement sample (c10)>

A measurement sample (c10) was obtained in the same manner as in the paragraph Working Example 1 (Preparation of measurement sample (2)), except that resin sheet (2) was substituted with resin sheet (c10).

<Evaluation of heat resistance>

The spectra of the measurement sample (c9) and measurement sample (c10) were measured in the same manner as shown in the paragraph Working Example 1 (Evaluation of heat resistance).

YI of measurement sample (c9) was 1.4 and YI of measurement sample (c10) was 28.1. ΔYI of measurement sample (c9) and measurement sample (c10) was 26.7.

(Comparative Example 6)

(Preparation of particulate copper salt-dispersed resin)

A particulate copper salt-dispersed PVB resin (c6) was obtained in the same manner as in the paragraph Working Example 4 (Preparation of particulate copper salt-dispersed resin), except that the 50 mg of IRGAFOS 168 was substituted with 50 mg of triphenyl phosphite (manufactured by Kanto Chemical Co., Inc.) (hereinafter Formula 34).

[Formula 17]

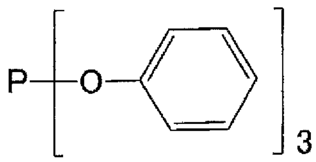

TRIPHENYL PHOSPHITE

・・・(34)

(Evaluation)

<Preparation of resin sheets>

Resin sheets (c11) and (c12) were obtained in the same manner as in the paragraph Working Example 1 (Preparation of resin sheets), except that the particulate copper salt-dispersed PVB resin (1) was substituted with particulate copper salt-dispersed PVB resin (c6).

<Preparation of measurement sample (c11)>

A measurement sample (c11) was obtained in the same manner as in the paragraph Working Example 1 (Preparation of measurement sample (1)), except that resin sheet (1) was substituted with resin sheet (c11).

<Preparation of measurement sample (c12)>

A measurement sample (c12) was obtained in the same manner as in the paragraph Working Example 1 (Preparation of measurement sample (2)), except that resin sheet (2) was substituted with resin sheet (c12).

<Evaluation of heat resistance>

The spectra of the measurement sample (c11) and measurement sample (c12) were measured in the same manner as shown in the paragraph Working Example 1 (Evaluation of heat resistance).

YI of measurement sample (c11) was 1.8 and YI of measurement sample (c12) was 60.4. ΔYI of measurement sample (c11) and measurement sample (c12) was 58.6.

(Comparative Example 7)

(Preparation of particulate copper salt-dispersed resin)

A particulate copper salt-dispersed PVB resin (c7) was obtained in the same manner as in the paragraph Working Example 4 (Preparation of particulate copper salt-dispersed resin), except that the 50 mg of IRGAFOS 168 was substituted with 50 mg of tri-ortho-tolyl phosphite (manufactured by Tokyo Chemical Industry Co., Inc.) (hereinafter Formula 35).

[Formula 18]

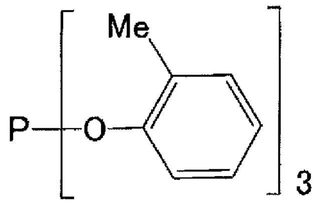

TRI-ORTHO-TOLYL PHOSPHITE

· · · (3 5)

(Evaluation)

<Preparation of resin sheets>

Resin sheets (c13) and (c14) were obtained in the same manner as in the paragraph Working Example 1 (Preparation of resin sheets), except that the particulate copper salt-dispersed PVB resin (1) was substituted with particulate copper salt-dispersed PVB resin (c7).

<Preparation of measurement sample (c13)>

A measurement sample (c13) was obtained in the same manner as in the paragraph Working Example 1 (Preparation of measurement sample (1)), except that resin sheet (1) was substituted with resin sheet (c13).

<Preparation of measurement sample (c14)>

A measurement sample (c14) was obtained in the same manner as in the paragraph Working Example 1 (Preparation of measurement sample (2)), except that resin sheet (2) was substituted with resin sheet (c14).

<Evaluation of heat resistance>

The spectra of the measurement sample (c13) and measurement sample (c14) were measured in the same manner as shown in the paragraph Working Example 1 (Evaluation of heat resistance).

YI of measurement sample (c13) was 1.1 and YI of measurement sample (c14) was 44.0. ΔYI of measurement sample (c13) and measurement sample (c14) was 42.9.

(Working Example 6)

(Preparation of particulate copper salt-dispersed resin)

A particulate copper salt-dispersed PVB resin (6) was obtained in the same manner as in the paragraph Working Example 4 (Preparation of particulate copper salt-dispersed resin), except that the 50 mg of IRGAFOS 168 was substituted with 50 mg of IRGANOX 1076 (manufactured BASF).

(Evaluation)

<Preparation of resin sheets>

Resin sheets (11) and (12) were obtained in the same manner as in the paragraph Working Example 1 (Preparation of resin sheets), except that the particulate copper salt-dispersed PVB resin (1) was substituted with particulate copper salt-dispersed PVB resin (6).

<Preparation of measurement sample (11)>

A measurement sample (11) was obtained in the same manner as in the paragraph Working Example 1 (Preparation of measurement sample (1)), except that resin sheet (1) was substituted with resin sheet (11).

<Preparation of measurement sample (12)>

A measurement sample (12) was obtained in the same manner as in the paragraph Working Example 1 (Preparation of measurement sample (2)), except that resin sheet (2) was substituted with resin sheet (12).

<Evaluation of heat resistance>

The spectra of the measurement sample (11) and measurement sample (12) were measured in the same manner as shown in the paragraph Working Example 1 (Evaluation of heat resistance).
YI of measurement sample (11) was 1.0 and YI of measurement sample (12) was 3.3. ΔYI of measurement sample (11) and measurement sample (12) was 2.3.

(Working Example 7)

(Preparation of particulate copper salt-dispersed resin)

A particulate copper salt-dispersed PVB resin (7) was obtained in the same manner as in the paragraph Working Example 1 (Preparation of particulate copper salt-dispersed resin), except that the 64 mg of IRGAFOS 168 was substituted with 6.4 mg of 2,6-di-t-butyl-4-methylphenol (BHT, manufactured by Wako Pure Chemical Industries, Ltd.).

(Evaluation)

<Preparation of resin sheets>

Resin sheets (13) and (14) were obtained in the same manner as in the paragraph Working Example 1 (Preparation of resin sheets), except that the particulate copper salt-dispersed PVB resin (1) was substituted with particulate copper salt-dispersed PVB resin (7).

<Preparation of measurement sample (13)>

A measurement sample (13) was obtained in the same manner as in the paragraph Working Example 1 (Preparation of measurement sample (1)), except that resin sheet (1) was substituted with resin sheet (13).

<Preparation of measurement sample (14)>

A measurement sample (14) was obtained in the same manner as in the paragraph Working Example 1 (Preparation of measurement sample (2)), except that resin sheet (2) was substituted with resin sheet (14).

<Evaluation of heat resistance>

The spectra of the measurement sample (13) and measurement sample (14) were measured in the same manner as shown in the paragraph Working Example 1 (Evaluation of heat resistance).
YI of measurement sample (13) was 4.3 and YI of measurement sample (14) was 9.4. ΔYI of measurement sample (13) and measurement sample (14) was 5.1.

(Working Example 8)

(Preparation of particulate copper salt-dispersed resin)

A particulate copper salt-dispersed PVB resin (8) was obtained in the same manner as in the paragraph Working Example 1 (Preparation of particulate copper salt-dispersed resin), except that the 64 mg of IRGAFOS 168 was substituted with 6.4 mg of ADK STAB AO-20 (manufactured by ADEKA Corp.).

(Evaluation)

<Preparation of resin sheets>

Resin sheets (15) and (16) were obtained in the same manner as in the paragraph Working Example 1 (Preparation of resin sheets), except that the particulate copper salt-dispersed PVB resin (1) was substituted with particulate copper salt-dispersed PVB resin (8).

<Preparation of measurement sample (15)>

A measurement sample (15) was obtained in the same manner as in the paragraph Working Example 1 (Preparation of measurement sample (1)), except that resin sheet (1) was substituted with resin sheet (15).

<Preparation of measurement sample (16)>

A measurement sample (16) was obtained in the same manner as in the paragraph Working Example 1 (Preparation of measurement sample (2)), except that resin sheet (2) was substituted with resin sheet (16).

<Evaluation of heat resistance>

The spectra of the measurement sample (15) and measurement sample (16) were measured in the same manner as shown in the paragraph Working Example 1 (Evaluation of heat resistance).
YI of measurement sample (15) was 4.5 and YI of measurement sample (16) was 8.3. ΔYI of measurement sample (15) and measurement sample (16) was 3.8.

(Working Example 9)

(Preparation of particulate copper salt-dispersed resin)

A particulate copper salt-dispersed PVB resin (9) was obtained in the same manner as in the paragraph Working Example 1 (Preparation of particulate copper salt-dispersed resin), except that the 64 mg of IRGAFOS 168 was substituted with 64.0 mg of IRGANOX 1076 (manufactured by BASF).

(Evaluation)

<Preparation of resin sheets>

Resin sheets (17) and (18) were obtained in the same manner as in the paragraph Working Example 1 (Preparation of resin sheets), except that the particulate copper salt-dispersed PVB resin (1) was substituted with particulate copper salt-dispersed PVB resin (9).

<Preparation of measurement sample (17)>

A measurement sample (17) was obtained in the same manner as in the paragraph Working Example 1 (Preparation of measurement sample (1)), except that resin sheet (1) was substituted with resin sheet (17).

<Preparation of measurement sample (18)>

A measurement sample (18) was obtained in the same manner as in the paragraph Working Example 1 (Preparation of measurement sample (2)), except that resin sheet (2) was substituted with resin sheet (18).

<Evaluation of heat resistance>

The spectra of the measurement sample (17) and measurement sample (18) were measured in the same manner as shown in the paragraph Working Example 1 (Evaluation of heat resistance).

YI of measurement sample (17) was 4.5 and YI of measurement sample (18) was 8.3. ΔYI of measurement sample (17) and measurement sample (18) was 3.8.

The results for working examples and comparative examples are shown in Table 1.

[Table 1]

| | Measurement Sample | Copper phosphonate | Antioxidant | 120°C YI | 200°C YI | ΔYI |
|---|---|---|---|---|---|---|
| Working Example 1 | 1,2 | | IRGAFOS 168 | 4.1 | 7.4 | 3.3 |
| Comparative Example 1 | c1,c2 | | - | 2.8 | 12.6 | 9.8 |
| Working Example 2 | 3,4 | | GSY-P101 | 3.5 | 7.9 | 4.4 |
| Working Example 3 | 5,6 | | SUMILIZER GP | 3.1 | 10.6 | 7.5 |
| Comparative Example 2 | c3, c4 | copper n-butyl phosphonate | IRGAF0S 38 | 4.0 | 35.3 | 31.3 |
| Working Example 7 | 13,14 | | BHT | 4.3 | 9.4 | 5.1 |
| Working Example 8 | 15,16 | | ADK STABAO-20 | 4.5 | 8.3 | 3.8 |
| Working Example 9 | 17,18 | | IRGANOX 1076 | 4.5 | 8.3 | 3.8 |
| Working Example 4 | 7,8 | | IRGAFOS 168 | 1.2 | 4.2 | 3.0 |
| Working Example 5 | 9,10 | | SUMILIZER GP | 1.2 | 5.3 | 4.1 |
| Comparative Example 3 | c5,c6 | | - | 1.5 | 7.5 | 6.0 |
| Comparative Example 4 | c7, c8 | copper ethylphosphonate | ADK STAB AO-503A | 1.5 | 25.2 | 23.7 |
| Comparative Example 5 | c9,c10 | | ADK STAB C | 1.4 | 28.1 | 26.7 |
| Comparative Example 6 | c11,c12 | | triphenyl phosphite | 1.8 | 60.4 | 58.6 |

(continued)

| | Measurement Sample | Copper phosphonate | Antioxidant | 120°C YI | 200°C YI | ΔYI |
|---|---|---|---|---|---|---|
| Comparative Example 7 | c13,c14 | | tri-ortho-tolyl phosphite | 1.1 | 44.0 | 42.9 |
| Working Example 6 | 11,12 | | IRGANOX 1076 | 1.0 | 3.3 | 2.3 |

(Working Example 10)

(Preparation of particulate copper salt-dispersed resin)

1.90 gm of triethylene glycol bis(2-ethylhexanoate) (3GO, plasticizer), 250 mL of toluene, and 5.00 gm of polyvinyl butyral (PVB) were added to a 300 mL Erlenmeyer flask. 5.0 mg of IRGANOX 245 (manufactured by BASF) were then added.

3.14 gm of the above copper phosphonate toluene dispersion (1) (containing 0.583 mmol copper salt) were then added to this flask and stirred for 14 hours at 20°C, and then subjected to ultrasonic irradiation for 1 hour to uniformly dissolve the PVB.

This dispersion was spread on a Teflon (registered trademark) tray and air dried for 12 hours at 20°C. This product was then vacuum dried at 70°C for another 4 hours to completely remove the solvent and yield a particulate copper salt-dispersed PVB resin (10).

(Evaluation)

<Preparation of resin sheets>

Resin sheets (19) and (20) were obtained in the same manner as in the paragraph Working Example 1 (Preparation of resin sheets), except that the particulate copper salt-dispersed PVB resin (1) was substituted with particulate copper salt-dispersed PVB resin (10).

<Preparation of measurement sample (19)>

A measurement sample (19) was prepared in the same manner as in the paragraph Working Example 1 (Preparation of measurement sample (1)), except that resin sheet (1) was substituted with resin sheet (19).

<Preparation of measurement sample (20)>

A measurement sample (20) was prepared in the same manner as in the paragraph Working Example 1 (Preparation of measurement sample (2)), except that resin sheet (2) was substituted with resin sheet (20).

<Evaluation of heat resistance>

The spectra of the measurement sample (19) and measurement sample (20) were measured in the same manner as shown in the paragraph Working Example 1 (Evaluation of heat resistance).

YI of measurement sample (19) was 4.3 and YI of measurement sample (20) was 11.8. ΔYI of measurement sample (19) and measurement sample (20) was 7.5.

(Working Example 11)

(Preparation of particulate copper salt-dispersed resin)

A particulate copper salt-dispersed PVB resin (11) was obtained in the same manner as in the paragraph Working Example 10 (Preparation of particulate copper salt-dispersed resin), except that the 5.0 mg of IRGANOX 245 was substituted with 15.0 mg of IRGANOX 259 (manufactured by BASF).

(Evaluation)

<Preparation of resin sheets>

Resin sheets (21) and (22) were obtained in the same manner as in the paragraph Working Example 1 (Preparation of resin sheets), except that the particulate copper salt-dispersed PVB resin (1) was substituted with particulate copper salt-dispersed PVB resin (11).

<Preparation of measurement sample (21)>

A measurement sample (21) was prepared in the same manner as in the paragraph Working Example 1 (Preparation of measurement sample (1)), except that resin sheet (1) was substituted with resin sheet (21).

<Preparation of measurement sample (22)>

A measurement sample (22) was prepared in the same manner as in the paragraph Working Example 1 (Preparation of measurement sample (2)), except that resin sheet (2) was substituted with resin sheet (22).

<Evaluation of heat resistance>

The spectra of the measurement sample (21) and measurement sample (22) were measured in the same manner as shown in the paragraph Working Example 1 (Evaluation of heat resistance).
YI of measurement sample (21) was 5.4 and YI of measurement sample (22) was 9.4. ΔYI of measurement sample (21) and measurement sample (22) was 4.0.

(Working Example 12)

(Preparation of particulate copper salt-dispersed resin)

A particulate copper salt-dispersed PVB resin (12) was obtained in the same manner as in the paragraph Working Example 10 (Preparation of particulate copper salt-dispersed resin), except that the 5.0 mg of IRGANOX 245 was substituted with 5.0 mg of IRGANOX 1010 (manufactured by BASF).

(Evaluation)

<Preparation of resin sheets>

Resin sheets (23) and (24) were obtained in the same manner as in the paragraph Working Example 1 (Preparation of resin sheets), except that the particulate copper salt-dispersed PVB resin (1) was substituted with particulate copper salt-dispersed PVB resin (12).

<Preparation of measurement sample (23)>

A measurement sample (23) was prepared in the same manner as in the paragraph Working Example 1 (Preparation of measurement sample (1)), except that resin sheet (1) was substituted with resin sheet (23).

<Preparation of measurement sample (24)>

A measurement sample (24) was prepared in the same manner as in the paragraph Working Example 1 (Preparation of measurement sample (2)), except that resin sheet (2) was substituted with resin sheet (24).

<Evaluation of heat resistance>

The spectra of the measurement sample (23) and measurement sample (24) were measured in the same manner as shown in the paragraph Working Example 1 (Evaluation of heat resistance).
YI of measurement sample (23) was 3.4 and YI of measurement sample (24) was 9.6. ΔYI of measurement sample (23) and measurement sample (23) was 6.2.

(Working Example 13)

(Preparation of particulate copper salt-dispersed resin)

A particulate copper salt-dispersed PVB resin (13) was obtained in the same manner as in the paragraph Working Example 10 (Preparation of particulate copper salt-dispersed resin), except that the 5.0 mg of IRGANOX 245 was substituted with 2.5 mg of IRGANOX 1098 (manufactured by BASF).

(Evaluation)

<Preparation of resin sheets>

Resin sheets (25) and (26) were obtained in the same manner as in the paragraph Working Example 1 (Preparation of resin sheets), except that the particulate copper salt-dispersed PVB resin (1) was substituted with particulate copper salt-dispersed PVB resin (13).

<Preparation of measurement sample (25)>

A measurement sample (25) was prepared in the same manner as in the paragraph Working Example 1 (Preparation of measurement sample (1)), except that resin sheet (1) was substituted with resin sheet (25).

<Preparation of measurement sample (26)>

A measurement sample (26) was prepared in the same manner as in the paragraph Working Example 1 (Preparation of measurement sample (2)), except that resin sheet (2) was substituted with resin sheet (26).

<Evaluation of heat resistance>

The spectra of the measurement sample (25) and measurement sample (26) were measured in the same manner as shown in the paragraph Working Example 1 (Evaluation of heat resistance).

YI of measurement sample (25) was 4.7 and YI of measurement sample (26) was 8.4. ΔYI of measurement sample (25) and measurement sample (26) was 3.7.

(Working Example 14)

(Preparation of particulate copper salt-dispersed resin)

A particulate copper salt-dispersed PVB resin (14) was obtained in the same manner as in the paragraph Working Example 10 (Preparation of particulate copper salt-dispersed resin), except that the 5.0 mg of IRGANOX 245 was substituted with 3.7 mg of IRGANOX 1135 (manufactured by BASF).

(Evaluation)

<Preparation of resin sheets>

Resin sheets (27) and (28) were obtained in the same manner as in the paragraph Working Example 1 (Preparation of resin sheets), except that the particulate copper salt-dispersed PVB resin (1) was substituted with particulate copper salt-dispersed PVB resin (14).

<Preparation of measurement sample (27)>

A measurement sample (27) was prepared in the same manner as in the paragraph Working Example 1 (Preparation of measurement sample (1)), except that resin sheet (1) was substituted with resin sheet (27).

<Preparation of measurement sample (28)>

A measurement sample (28) was prepared in the same manner as in the paragraph Working Example 1 (Preparation of measurement sample (2)), except that resin sheet (2) was substituted with resin sheet (28).

<Evaluation of heat resistance>

The spectra of the measurement sample (27) and measurement sample (28) were measured in the same manner as shown in the paragraph Working Example 1 (Evaluation of heat resistance).

YI of measurement sample (27) was 3.1 and YI of measurement sample (28) was 11.7. ΔYI of measurement sample (27) and measurement sample (28) was 8.6.

(Working Example 15)

(Preparation of particulate copper salt-dispersed resin)

A particulate copper salt-dispersed PVB resin (15) was obtained in the same manner as in the paragraph Working Example 10 (Preparation of particulate copper salt-dispersed resin), except that the 5.0 mg of IRGANOX 245 was substituted with 5.0 mg of SUMILIZER GM (manufactured by Sumitomo Chemical Co., Ltd.).

(Evaluation)

<Preparation of resin sheets>

Resin sheets (29) and (30) were obtained in the same manner as in the paragraph Working Example 1 (Preparation of resin sheets), except that the particulate copper salt-dispersed PVB resin (1) was substituted with particulate copper salt-dispersed PVB resin (15).

<Preparation of measurement sample (29)>

A measurement sample (29) was prepared in the same manner as in the paragraph Working Example 1 (Preparation of measurement sample (1)), except that resin sheet (1) was substituted with resin sheet (29).

<Preparation of measurement sample (30)>

A measurement sample (30) was prepared in the same manner as in the paragraph Working Example 1 (Preparation of measurement sample (2)), except that resin sheet (2) was substituted with resin sheet (30).

<Evaluation of heat resistance>

The spectra of the measurement sample (29) and measurement sample (30) were measured in the same manner as shown in the paragraph Working Example 1 (Evaluation of heat resistance).

YI of measurement sample (29) was 4.5 and YI of measurement sample (30) was 11.9. ΔYI of measurement sample (29) and measurement sample (30) was 7.4.

(Working Example 16)

(Preparation of particulate copper salt-dispersed resin)

A particulate copper salt-dispersed PVB resin (16) was obtained in the same manner as in the paragraph Working Example 10 (Preparation of particulate copper salt-dispersed resin), except that the 5.0 mg of IRGANOX 245 was substituted with 15.0 mg of SUMILIZER GS(F) (manufactured by Sumitomo Chemical Co., Ltd.).

(Evaluation)

<Preparation of resin sheets>

Resin sheets (31) and (32) were obtained in the same manner as in the paragraph Working Example 1 (Preparation of resin sheets), except that the particulate copper salt-dispersed PVB resin (1) was substituted with particulate copper salt-dispersed PVB resin (16).

<Preparation of measurement sample (31)>

A measurement sample (31) was prepared in the same manner as in the paragraph Working Example 1 (Preparation of measurement sample (1)), except that resin sheet (1) was substituted with resin sheet (31).

<Preparation of measurement sample (32)>

A measurement sample (32) was prepared in the same manner as in the paragraph Working Example 1 (Preparation of measurement sample (2)), except that resin sheet (2) was substituted with resin sheet (32).

<Evaluation of heat resistance>

The spectra of the measurement sample (31) and measurement sample (32) were measured in the same manner as shown in the paragraph Working Example 1 (Evaluation of heat resistance).

YI of measurement sample (31) was 4.2 and YI of measurement sample (32) was 11.0. ΔYI of measurement sample (31) and measurement sample (32) was 6.8.

(Working Example 17)

(Preparation of particulate copper salt-dispersed resin)

A particulate copper salt-dispersed PVB resin (17) was obtained in the same manner as in the paragraph Working Example 10 (Preparation of particulate copper salt-dispersed resin), except that the 5.0 mg of IRGANOX 245 was substituted with 15.0 mg of SUMILIZER GA-80 (manufactured by Sumitomo Chemical Co., Ltd.).

(Evaluation)

<Preparation of resin sheets>

Resin sheets (33) and (34) were obtained in the same manner as in the paragraph Working Example 1 (Preparation of resin sheets), except that the particulate copper salt-dispersed PVB resin (1) was substituted with particulate copper salt-dispersed PVB resin (17).

<Preparation of measurement sample (33)>

A measurement sample (33) was prepared in the same manner as in the paragraph Working Example 1 (Preparation of measurement sample (1)), except that resin sheet (1) was substituted with resin sheet (33).

<Preparation of measurement sample (34)>

A measurement sample (34) was prepared in the same manner as in the paragraph Working Example 1 (Preparation of measurement sample (2)), except that resin sheet (2) was substituted with resin sheet (34).

<Evaluation of heat resistance>

The spectra of the measurement sample (33) and measurement sample (34) were measured in the same manner as shown in the paragraph Working Example 1 (Evaluation of heat resistance).

YI of measurement sample (33) was 3.9 and YI of measurement sample (34) was 12.3. ΔYI of measurement sample (33) and measurement sample (34) was 8.4.

(Working Example 18)

(Preparation of particulate copper salt-dispersed resin)

A particulate copper salt-dispersed PVB resin (18) was obtained in the same manner as in the paragraph Working Example 10 (Preparation of particulate copper salt-dispersed resin), except that the 5.0 mg of IRGANOX 245 was substituted with 5.0 mg of SUMILIZER BBM-S (manufactured by Sumika Chemtex Co., Ltd.).

(Evaluation)

<Preparation of resin sheets>

Resin sheets (35) and (36) were obtained in the same manner as in the paragraph Working Example 1 (Preparation of resin sheets), except that the particulate copper salt-dispersed PVB resin (1) was substituted with particulate copper salt-dispersed PVB resin (18).

<Preparation of measurement sample (35)>

A measurement sample (35) was prepared in the same manner as in the paragraph Working Example 1 (Preparation of measurement sample (1)), except that resin sheet (1) was substituted with resin sheet (35).

<Preparation of measurement sample (36)>

A measurement sample (36) was prepared in the same manner as in the paragraph Working Example 1 (Preparation of measurement sample (2)), except that resin sheet (2) was substituted with resin sheet (36).

<Evaluation of heat resistance>

The spectra of the measurement sample (35) and measurement sample (36) were measured in the same manner as shown in the paragraph Working Example 1 (Evaluation of heat resistance).

YI of measurement sample (35) was 4.8 and YI of measurement sample (36) was 9.9. ΔYI of measurement sample (35) and measurement sample (36) was 5.1.

(Working Example 19)

(Preparation of particulate copper salt-dispersed resin)

A particulate copper salt-dispersed PVB resin (19) was obtained in the same manner as in the paragraph Working Example 10 (Preparation of particulate copper salt-dispersed resin), except that the 5.0 mg of IRGANOX 245 was substituted with 5.0 mg of SUMILIZER MDP-S (manufactured by Sumitomo Chemical Co., Ltd.).

(Evaluation)

<Preparation of resin sheets>

Resin sheets (37) and (38) were obtained in the same manner as in the paragraph Working Example 1 (Preparation of resin sheets), except that the particulate copper salt-dispersed PVB resin (1) was substituted with particulate copper salt-dispersed PVB resin (19).

<Preparation of measurement sample (37)>

A measurement sample (37) was prepared in the same manner as in the paragraph Working Example 1 (Preparation of measurement sample (1)), except that resin sheet (1) was substituted with resin sheet (37).

<Preparation of measurement sample (38)>

A measurement sample (38) was prepared in the same manner as in the paragraph Working Example 1 (Preparation of measurement sample (2)), except that resin sheet (2) was substituted with resin sheet (38).

<Evaluation of heat resistance>

The spectra of the measurement sample (37) and measurement sample (38) were measured in the same manner as shown in the paragraph Working Example 1 (Evaluation of heat resistance).

YI of measurement sample (37) was 4.8 and YI of measurement sample (38) was 12.1. ΔYI of measurement sample (37) and measurement sample (38) was 7.3.

(Working Example 20)

(Preparation of particulate copper salt-dispersed resin)

A particulate copper salt-dispersed PVB resin (20) was obtained in the same manner as in the paragraph Working Example 10 (Preparation of particulate copper salt-dispersed resin), except that the 5.0 mg of IRGANOX 245 was substituted with 5.0 mg of YOSHINOX 425 (manufactured by API Corp.).

(Evaluation)

<Preparation of resin sheets>

Resin sheets (39) and (40) were obtained in the same manner as in the paragraph Working Example 1 (Preparation of resin sheets), except that the particulate copper salt-dispersed PVB resin (1) was substituted with particulate copper salt-dispersed PVB resin (20).

<Preparation of measurement sample (39)>

A measurement sample (39) was prepared in the same manner as in the paragraph Working Example 1 (Preparation of measurement sample (1)), except that resin sheet (1) was substituted with resin sheet (39).

<Preparation of measurement sample (40)>

A measurement sample (40) was prepared in the same manner as in the paragraph Working Example 1 (Preparation of measurement sample (2)), except that resin sheet (2) was substituted with resin sheet (40).

<Evaluation of heat resistance>

The spectra of the measurement sample (39) and measurement sample (40) were measured in the same manner as shown in the paragraph Working Example 1 (Evaluation of heat resistance).

YI of measurement sample (39) was 5.1 and YI of measurement sample (40) was 11.8. ΔYI of measurement sample (39) and measurement sample (40) was 6.7.

(Working Example 21)

(Preparation of particulate copper salt-dispersed resin)

A particulate copper salt-dispersed PVB resin (21) was obtained in the same manner as in the paragraph Working Example 10 (Preparation of particulate copper salt-dispersed resin), except that the 5.0 mg of IRGANOX 245 was substituted with 1.5 mg of IRGANOX 1330 (manufactured by BASF).

(Evaluation)

<Preparation of resin sheets>

Resin sheets (41) and (42) were obtained in the same manner as in the paragraph Working Example 1 (Preparation of resin sheets), except that the particulate copper salt-dispersed PVB resin (1) was substituted with particulate copper salt-dispersed PVB resin (21).

<Preparation of measurement sample (41)>

A measurement sample (41) was prepared in the same manner as in the paragraph Working Example 1 (Preparation of measurement sample (1)), except that resin sheet (1) was substituted with resin sheet (41).

<Preparation of measurement sample (42)>

A measurement sample (42) was prepared in the same manner as in the paragraph Working Example 1 (Preparation of measurement sample (2)), except that resin sheet (2) was substituted with resin sheet (42).

<Evaluation of heat resistance>

The spectra of the measurement sample (41) and measurement sample (42) were measured in the same manner as shown in the paragraph Working Example 1 (Evaluation of heat resistance).

YI of measurement sample (41) was 4.5 and YI of measurement sample (42) was 10.8. ΔYI of measurement sample (41) and measurement sample (42) was 6.3.

The results for working examples and comparative examples are shown in Table 2.

[Table 2]

| | Measurement Sample | Copper Phosphonate | Antioxidant | 120°C YI | 200°C YI | ΔYI |
|---|---|---|---|---|---|---|
| Working Example 10 | 19,20 | copper n-butylphosphonate | IRGANOX 245 | 4.3 | 11.8 | 7.5 |
| Working Example 11 | 21,22 | | IRGANOX 259 | 5.4 | 9.4 | 4.0 |
| Working Example 12 | 23,24 | | IRGANOX 1010 | 3.4 | 9.6 | 6.2 |
| Working Example 13 | 25,26 | | IRGANOX 1098 | 4.7 | 8.4 | 3.7 |
| Working Example 14 | 27,28 | | IRGANOX 1135 | 3.1 | 11.7 | 8.6 |
| Working Example 15 | 29,30 | | SUMILIZER GM | 4.5 | 11.9 | 7.4 |
| Working Example 16 | 31,32 | | SUMILIZER GS(F) | 4.2 | 11.0 | 6.8 |
| Working Example 17 | 33,34 | | SUMILIZER GA-80 | 3.9 | 12.3 | 8.4 |
| Working Example 18 | 35,36 | | SUMILIZER BBM-S | 4.8 | 9.9 | 5.1 |
| Working Example 19 | 37,38 | | SUMILIZER MDP-S | 4.8 | 12.1 | 7.3 |
| Working Example 20 | 39,40 | | YOSHINOX 425 | 5.1 | 11.8 | 6.7 |
| Working Example 21 | 41,42 | | IRGANOX 1330 | 4.5 | 10.8 | 6.3 |

(Working Example 22)

<Preparation of measurement sample (2)>

A measurement sample (2) was obtained in the same manner as in Working Example 1.

<Evaluation of heat resistance>

The spectrum of the measurement sample (2) was measured in the same manner as shown in the paragraph Working Example 1 (Evaluation of heat resistance). YI of measurement sample (2) was 7.4.

<Evaluation of long-term heat resistance>

Long-term heat resistance was tested by the following method.

Measurement sample (2) was placed in a 100°C oven and held for 735 hours, and then the spectrum was measured to find YI.

YI after 735 hours was 11.0 and, where ΔYI is the difference from YI before the long-term heat resistance test, ΔYI was 3.9 (11.0 - 7.4).

(Comparative Example 8)

<Preparation of measurement sample (c2)>

A measurement sample (c2) was obtained in the same manner as in Comparative Example 1.

<Evaluation of heat resistance>

The spectrum of the measurement sample (c2) was measured in the same manner as shown in the paragraph Working Example 1 (Evaluation of heat resistance). YI of measurement sample (c2) was 12.6.

<Evaluation of long-term heat resistance>

The long-term heat resistance of measurement sample (c2) was measured by the same method as the method shown in the paragraph Working Example 22 (Evaluation of long-term heat resistance).

YI after 735 hours was 20.6 and, where ΔYI is the difference from YI before the long-term heat resistance test, ΔYI was 8.0 (20.6 - 12.6).

(Working Example 23)

<Preparation of measurement sample (4)>

A measurement sample (4) was obtained in the same manner as in Working Example 2.

<Evaluation of heat resistance>

The spectrum of the measurement sample (4) was measured in the same manner as shown in the paragraph Working Example 1 (Evaluation of heat resistance). YI of measurement sample (4) was 7.9.

<Evaluation of long-term heat resistance>

The long-term heat resistance of the measurement sample (4) was measured in the same manner as shown in the paragraph Working Example 22 (Evaluation of long-term heat resistance).

YI after 735 hours was 14.8 and, where ΔYI is the difference from YI before the long-term heat resistance test, ΔYI was 6.9 (14.8 - 7.9).

(Working Example 24)

<Preparation of measurement sample (6)>

A measurement sample (6) was obtained in the same manner as in Working Example 3.

<Evaluation of heat resistance>

The spectrum of the measurement sample (6) was measured in the same manner as shown in the paragraph Working Example 1 (Evaluation of heat resistance). YI of measurement sample (6) was 10.6.

<Evaluation of long-term heat resistance>

The long-term heat resistance of the measurement sample (6) was measured in the same manner as shown in the paragraph Working Example 22 (Evaluation of long-term heat resistance).
YI after 735 hours was 18.2 and, where ΔYI is the difference from YI before the long-term heat resistance test, ΔYI was 7.6 (18.2 - 10.6).

(Working Example 25)

<Preparation of measurement sample (8)>

A measurement sample (8) was obtained in the same manner as in Working Example 4.

<Evaluation of heat resistance>

The spectrum of the measurement sample (8) was measured in the same manner as shown in the paragraph Working Example 1 (Evaluation of heat resistance). YI of measurement sample (8) was 4.2.

<Evaluation of long-term heat resistance>

The long-term heat resistance of the measurement sample (8) was measured in the same manner as shown in the paragraph Working Example 22 (Evaluation of long-term heat resistance).
YI after 735 hours was 7.3 and, where ΔYI is the difference from YI before the long-term heat resistance test, ΔYI was 3.1 (7.3 - 4.2).

(Working Example 26)

<Preparation of measurement sample (10)>

A measurement sample (10) was obtained in the same manner as in Working Example 5.

<Evaluation of heat resistance>

The spectrum of the measurement sample (10) was measured in the same manner as shown in the paragraph Working Example 1 (Evaluation of heat resistance). YI of measurement sample (10) was 5.3.

<Evaluation of long-term heat resistance>

The long-term heat resistance of the measurement sample (10) was measured in the same manner as shown in the paragraph Working Example 22 (Evaluation of long-term heat resistance).
YI after 735 hours was 11.9 and, where ΔYI is the difference from YI before the long-term heat resistance test, ΔYI was 6.6 (11.9 - 5.3).

(Comparative Example 9)

<Preparation of measurement sample (c6)>

A measurement sample (c6) was obtained in the same manner as in Comparative Example 3.

<Evaluation of heat resistance>

The spectrum of the measurement sample (c6) was measured in the same manner as shown in the paragraph Working Example 1 (Evaluation of heat resistance).YI of measurement sample (c6) was 7.5.

<Evaluation of long-term heat resistance>

The long-term heat resistance of the measurement sample (c6) was measured in the same manner as shown in the paragraph Working Example 22 (Evaluation of long-term heat resistance).
YI after 735 hours was 15.2 and, where ΔYI is the difference from YI before the long-term heat resistance test, ΔYI was 7.7 (15.2 - 7.5).

(Working Example 27)

<Preparation of measurement sample (14)>

A measurement sample (14) was obtained in the same manner as in Working Example 7.

<Evaluation of heat resistance>

The spectrum of the measurement sample (14) was measured in the same manner as shown in the paragraph Working Example 1 (Evaluation of heat resistance). YI of measurement sample (14) was 9.4.

<Evaluation of long-term heat resistance>

The long-term heat resistance of the measurement sample (14) was measured in the same manner as shown in the paragraph Working Example 22 (Evaluation of long-term heat resistance).
YI after 735 hours was 12.2 and, where ΔYI is the difference from YI before the long-term heat resistance test, ΔYI was 2.8 (12.2 - 9.4).

(Working Example 28)

<Preparation of measurement sample (16)>

A measurement sample (16) was obtained in the same manner as in Working Example 8.

<Evaluation of heat resistance>

The spectrum of the measurement sample (16) was measured in the same manner as shown in the paragraph Working Example 1 (Evaluation of heat resistance).YI of measurement sample (16) was 8.3.

<Evaluation of long-term heat resistance>

The long-term heat resistance of the measurement sample (16) was measured in the same manner as shown in the paragraph Working Example 22 (Evaluation of long-term heat resistance).
YI after 735 hours was 11.3 and, where ΔYI is the difference from YI before the long-term heat resistance test, ΔYI was 3.0 (11.3 - 8.3).
The results for working examples and comparative examples are shown in Table 3.

[Table 3]

| | Measurement Sample | Copper Phosphonate | Antioxidant | 200°C YI | YI after holding at 100°C for 735 h | $\Delta$YI |
|---|---|---|---|---|---|---|
| Working Example 22 | 2 | n-butyl phosphonate | IRGAFOS 168 | 7.4 | 11.0 | 3.6 |
| Comparative Example 8 | c2 | | - | 12.6 | 20.6 | 8.0 |
| Working Example 23 | 4 | | GSY-PI01 | 7.9 | 14.8 | 6.9 |
| Working Example 24 | 6 | | SUMILIZER GP | 10.6 | 18.2 | 7.6 |
| Working Example 27 | 14 | | BHT | 9.4 | 12.2 | 2.8 |
| Working Example 28 | 16 | | ADK STAB AO-20 | 8.3 | 11.3 | 3.0 |
| Working Example 25 | 8 | copper ethylphosphonate | IRGAFOS 168 | 4.2 | 7.3 | 3.1 |
| Working Example 26 | 10 | | SUMILIZER GP | 5.3 | 11.9 | 6.6 |
| Comparative Example 9 | c6 | | - | 7.5 | 15.2 | 7.7 |

(Working Example 29)

<Preparation of measurement sample (2)>

A measurement sample (2) was obtained in the same manner as in Working Example 1.

<Evaluation of light resistance>

The spectrum of the measurement sample (2) was measured by the same method as that shown in the paragraph Working Example 1 (Evaluation of heat resistance). YI of measurement sample (2) was 7.4.

Visible light transmittance (Tvis) for measurement sample (2) was found using a spectrophotometer (model U-4000, manufactured by Hitachi, Ltd.). Tvis for measurement sample (2) was 85.8%.

Next, measurement sample (2) was placed in a super xenon weather meter (manufactured by Suga Test Instruments Co., Ltd.) and held for 300 hours under conditions of 180 W/m$^2$ irradiated light intensity, without rainfall, after which, the spectrum of the measurement sample was measured and YI and Tvis were found.

YI after 300 hours was 12.4 and, where $\Delta$YI is the difference from YI before the light resistance test, $\Delta$YI was 5.0 (12.4 - 7.4).

Tvis after 300 hours was 66.9% and, where $\Delta$Tvis is the difference from Tvis before the light resistance test, $\Delta$Tvis was 18.9% (85.8 - 66.9).

(Comparative Example 10)

<Preparation of measurement sample (c2)>

A measurement sample (c2) was obtained in the same manner as in Comparative Example 1.

<Evaluation of light resistance>

The light resistance of the measurement sample (c2) was evaluated by the same method as the method shown in the paragraph Working Example 29 (Evaluation of light resistance).

Before light resistance testing, YI of the measurement sample (c2) was 12.8 and Tvis was 84.1%.

YI after 300 hours was 20.1 and, where ΔYI is the difference from YI before the light resistance test, ΔYI was 7.3 (20.1 - 12.8).
Tvis after 300 hours was 42.0% and, where ΔTvis is the difference from Tvis before the light resistance test, ΔTvis was 42.1% (84.1 - 42.0).

(Working Example 30)

(Preparation of particulate copper salt-dispersed resin)

A particulate copper salt-dispersed PVB resin (22) was obtained in the same manner as in the paragraph Working Example 4 (Preparation of particulate copper salt-dispersed resin), except that the 50 mg of IRGAFOS 168 was substituted with 100 mg thereof.

(Evaluation)

<Preparation of resin sheets>

A resin sheet (43) was obtained in the same manner as resin sheet (2) in the paragraph Working Example 1 (Preparation of resin sheets), except that the particulate copper salt-dispersed PVB resin (1) was substituted with particulate copper salt-dispersed PVB resin (22).

<Preparation of measurement sample (43)>

A measurement sample (43) was obtained in the same manner as in the paragraph Working Example 1 (Preparation of measurement sample (2)), except that the resin sheet (2) was substituted with resin sheet (43).

<Evaluation of light resistance>

The light resistance of the measurement sample (43) was evaluated by the same method as the method shown in the paragraph Working Example 29 (Evaluation of light resistance).
Before light resistance testing, YI of the measurement sample (43) was 4.0 and Tvis was 87.9%.
YI after 300 hours was 4.5 and, where ΔYI is the difference from YI before the light resistance test, ΔYI was 0.5 (4.5 - 4.0)
Tvis after 300 hours was 87.2% and, where ΔTvis is the difference from Tvis before the light resistance test, ΔTvis was 0.7% (87.9 - 87.2).

(Working Example 31)

<Preparation of measurement sample (8)>

A measurement sample (8) was obtained in the same manner as in Working Example 4.

<Evaluation of light resistance>

The light resistance of the measurement sample (8) was evaluated by the same method as the method shown in the paragraph Working Example 29 (Evaluation of light resistance).
Before light resistance testing, YI of the measurement sample (8) was 4.9 and Tvis was 86.9%.
YI after 300 hours was 7.4 and, where ΔYI is the difference from YI before the light resistance test, ΔYI was 2.5 (7.4 - 4.9).
Tvis after 300 hours was 39.5% and, where ΔTvis is the difference from Tvis before the light resistance test, ΔTvis was 47.4% (86.9 - 39.5).

(Comparative Example 11)

<Preparation of measurement sample (c6)>

A measurement sample (c6) was obtained in the same manner as in Comparative Example 3.

<Evaluation of light resistance>

The light resistance of the measurement sample (c6) was evaluated by the same method as the method shown in the paragraph Working Example 29 (Evaluation of light resistance).

Before light resistance testing, YI of the measurement sample (c6) was 7.9 and Tvis was 87.2%.

YI after 300 hours was 18.2 and, where ΔYI is the difference from YI before the light resistance test, ΔYI was 10.3 (18.2 - 7.9).

Tvis after 300 hours was 12.8% and, where ΔTvis is the difference from Tvis before the light resistance test, ΔTvis was 74.4% (87.2 - 12.8).

The results for working examples and comparative examples are shown in Table 4.

[Table 4]

| | Measurement Sample | Copper phosphonate | Antioxidant | 200°C YI |
|---|---|---|---|---|
| Working Example 29 | 2 | copper n-butyl phosphonate | IRGAFOS 168 | 7.4 |
| Comparative Example 10 | c2 | | - | 12.8 |
| Working Example 30 | 43 | copper ethylphosphonate | IRGAFOS 168 (100 mg) | 4.0 |
| Working Example 31 | 8 | | IRGAFOS 168 (50 mg) | 4.9 |
| Comparative Example 11 | c6 | | - | 7.9 |

[Table 4] (Continued)

| | YI after light irradiation for 300 h | ΔYI | 200°C Tvis(%) | Tvis after light irradiation for 300 h(%) | ΔTvis |
|---|---|---|---|---|---|
| Working Example 29 | 12.4 | 5.0 | 85.8 | 66.9 | 18.9 |
| Comparative Example 10 | 20.1 | 7.3 | 84.1 | 42.0 | 42.1 |
| Working Example 30 | 4.5 | 0.5 | 87.9 | 87.2 | 0.7 |
| Working Example 31 | 7.4 | 2.5 | 86.9 | 39.5 | 47.4 |
| Comparative Example 11 | 18.2 | 10.3 | 87.2 | 12.8 | 74.4 |

## Claims

1. A resin composition made from a near-infrared absorbent, an antioxidant, and a resin; wherein the near-infrared absorbent is a particulate made from a copper phosphonate represented by Formula (1) below,
the antioxidant is at least one type of antioxidant selected from hindered phenol-based antioxidants and phosphorous-based antioxidants having not less than one structure represented by Formula (2) below bonded to a phosphorous atom in the molecule, and not having a structure represented by Formula (3) below bonded to the phosphorous atom in the molecule.

[Formula 1]

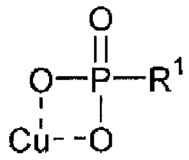

・・・(1)

(In Formula 1, $R^1$ is a univalent group represented by $-CH_2CH_2-R^{11}$, and $R^{11}$ indicates a hydrogen atom, an alkyl group having from 1 to 20 carbons, or an alkyl fluoride group having from 1 to 20 carbons.)

[Formula 2]

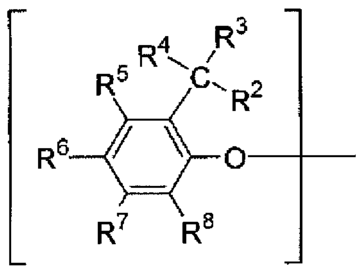

・・・(2)

(In Formula (2), $R^2$ to $R^4$ are each independently an alkyl group having 1 or 2 carbons, and $R^5$ to $R^8$ each independently indicates a hydrogen atom or an alkyl group having from 1 to 20 carbons; provided, in cases where the molecule has two or more of the structures represented by Formula (2), that $R^5$ to $R^8$ in one of the structures represented by Formula (2) may form crosslinks with $R^5$ to $R^8$ in the other of the structures represented by Formula (2).)
[Formula 3]

[O-R] (3)

(In Formula (3), R indicates an alkyl group.)

2. The resin composition according to claim 1, wherein the phosphorous-based antioxidant is a phosphorous-based antioxidant having not less than two structures represented by the Formula (2) bonded to a phosphorous atom in the molecule, and not having a structure represented by the Formula (3) bonded to the phosphorous atom in the molecule.

3. The resin composition according to claim 1 or 2, wherein, in the Formula (2), $R^2$ to $R^4$ are methyl groups.

4. The resin composition according to any one of claims 1 to 3, wherein the antioxidant is the phosphorous-based antioxidant.

5. The resin composition according to any one of claims 1 to 4, wherein the resin is at least one type of resin selected from a polyvinylacetal resin, ethylene-vinyl acetate copolymer, (meth)acrylic resin, polyester resin, polyurethane resin, vinyl chloride resin, polyolefin resin, polycarbonate resin, and norbornene resin.

6. The resin composition according to any one of claims 1 to 4, wherein the resin is a polyvinyl butyral resin or ethylene-vinyl acetate copolymer.

7. The resin composition according to any one of claims 1 to 6, which contains 0.05 to 30 parts by mass of near-infrared absorbent per 100 parts by mass of the resin.

8. The resin composition according to any one of claims 1 to 7, which contains 0.01 to 30 parts by mass of antioxidant per 100 parts by mass of the resin.

**9.** A laminated glass interlayer that is formed from the resin composition described in any one of claims 1 to 8.

**10.** A laminated glass having the laminated glass interlayer described in claim 9.

**INTERNATIONAL SEARCH REPORT**

International application No.
PCT/JP2013/071798

A. CLASSIFICATION OF SUBJECT MATTER
*C08L101/00*(2006.01)i, *C08K5/13*(2006.01)i, *C08K5/51*(2006.01)i, *C08K5/5317*(2006.01)i, *C03C27/12*(2006.01)i

According to International Patent Classification (IPC) or to both national classification and IPC

B. FIELDS SEARCHED

Minimum documentation searched (classification system followed by classification symbols)
C08L1/00-101/16, C08K3/00-13/08, C03C27/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-87243 A (Kureha Corp.),<br>10 May 2012 (10.05.2012),<br>claims; paragraphs [0071], [0076] to [0077]<br>(Family: none) | 1-10<br>1-10 |
| X<br>Y | JP 2010-83805 A (Kureha Corp.),<br>15 April 2010 (15.04.2010),<br>claims; paragraphs [0001] to [0007], [0054]<br>(Family: none) | 1-10<br>1-10 |
| X<br>Y | WO 2009/123020 A1 (Kureha Corp.),<br>08 October 2009 (08.10.2009),<br>claims; paragraphs [0001] to [0007], [0054]<br>& JP 2009-242650 A | 1-10<br>1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 November, 2013 (05.11.13) | 19 November, 2013 (19.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2013/071798

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2-32149 A (Saint-Gobain Vitrage),<br>01 February 1990 (01.02.1990),<br>claims; Industrial Field of Invention; examples<br>& US 5322875 A & EP 346199 A1 | 1-10 |
| A | JP 6-41384 A (Hoechst AG.),<br>15 February 1994 (15.02.1994),<br>claims<br>& US 5384346 A & EP 568999 A1 | 1-10 |
| A | WO 2011/141384 A1 (KURARAY EUROPE GMBH),<br>17 November 2011 (17.11.2011),<br>claims<br>& JP 2013-526628 A & US 2013/0123399 A1 | 1-10 |
| A | JP 11-349769 A (Denki Kagaku Kogyo Kabushiki Kaisha),<br>21 December 1999 (21.12.1999),<br>claims<br>(Family: none) | 1-10 |
| A | JP 2005-126650 A (E Ultimate Investments Ltd.),<br>19 May 2005 (19.05.2005),<br>claims<br>(Family: none) | 1-10 |
| A | WO 2009/090827 A1 (Kuraray Co., Ltd.),<br>23 July 2009 (23.07.2009),<br>claims<br>& US 2010/0311881 A1 & EP 2236572 A1 | 1-10 |
| A | WO 2006/035756 A1 (Kureha Corp.),<br>06 April 2006 (06.04.2006),<br>claims<br>& JP 4926712 B | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009242650 A